(19) Europäisches Patentamt
European Patent Office
Office européen des brevets

(11) **EP 3 533 183 B1**

(12) **FASCICULE DE BREVET EUROPEEN**

(45) Date de publication et mention
de la délivrance du brevet:
**05.08.2020 Bulletin 2020/32**

(51) Int Cl.:
*H04L 12/28* (2006.01)    *H04L 12/66* (2006.01)
*H04W 88/16* (2009.01)

(21) Numéro de dépôt: **17791652.5**

(22) Date de dépôt: **23.10.2017**

(86) Numéro de dépôt international:
**PCT/EP2017/076981**

(87) Numéro de publication internationale:
**WO 2018/077790 (03.05.2018 Gazette 2018/18)**

(54) **PROCÉDÉ DE SÉLECTION D'UNE PASSERELLE POUR L'ÉMISSION D'UNE TRAME**

VERFAHREN ZUR AUSWAHL EINES GATEWAY ZUR ÜBERTRAGUNG EINES RAHMENS

METHOD FOR SELECTING A GATEWAY FOR TRANSMITTING A FRAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2016 FR 1660505**

(43) Date de publication de la demande:
**04.09.2019 Bulletin 2019/36**

(73) Titulaire: **Sagemcom Energy & Telecom SAS**
**92500 Rueil-Malmaison (FR)**

(72) Inventeurs:
• **SENNOUN, Yassir**
**92500 Rueil Malmaison (FR)**
• **LE GOURRIEREC, Marc**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-2016/005371**

• NEUMANN PIERRE ET AL: "Indoor deployment of low-power wide area networks (LPWAN): A LoRaWAN case study", 2016 IEEE 12TH INTERNATIONAL CONFERENCE ON WIRELESS AND MOBILE COMPUTING, NETWORKING AND COMMUNICATIONS (WIMOB), IEEE, 17 octobre 2016 (2016-10-17), pages 1-8, XP033015442, DOI: 10.1109/WIMOB.2016.7763213

## Description

La présente invention concerne le domaine général des télécommunications. L'invention concerne plus particulièrement le domaine des communications sans fil pour des objets communicants (« *Machine to Machine - M2M* »
en anglais), et plus spécifiquement le domaine des réseaux de communication dits « réseaux étendus à longue portée »
(« *Long Range Wide-area network - LoRaWAN* » en anglais). Un exemple se trouve dans "NEUMANN PIERRE ET
AL: "Indoor deployment of low-power wide area networks (LPWAN): A LoRaWAN case study",2016 IEEE 12TH INTERNATIONAL CONFERENCE ON WIRELESS AND MOBILE COMPUTING, NETWORKING AND COMMUNICATIONS
(WIMOB), IEEE, 17 octobre 2016, pages 1-8, XP033015442"

Un réseau étendu à longue portée permet la connexion d'objets communicants et obéit à des contraintes
différentes que celles d'un réseau de communication classique tel un réseau GSM (« *Global System for Mobile* » en
anglais) ou un réseau UMTS (« *Universal Mobile Telecommunications System* » en anglais). En particulier, ce type de
réseau utilise fréquemment des bandes de fréquence dites « bandes ISM » *(Industriel, Scientifique et Médical)*. Ces
bandes de fréquences sont donc partagées par plusieurs opérateurs de réseaux, il est alors nécessaire de réduire au
minimum la consommation de la ressource radio disponible, que ce soit dans le sens dit « montant » (« *uplink* » en
anglais, d'un dispositif électronique terminal vers le cœur de réseau) ou dans le sens dit « descendant » (« *downlink* »
en anglais, du cœur de réseau vers un dispositif électronique terminal).

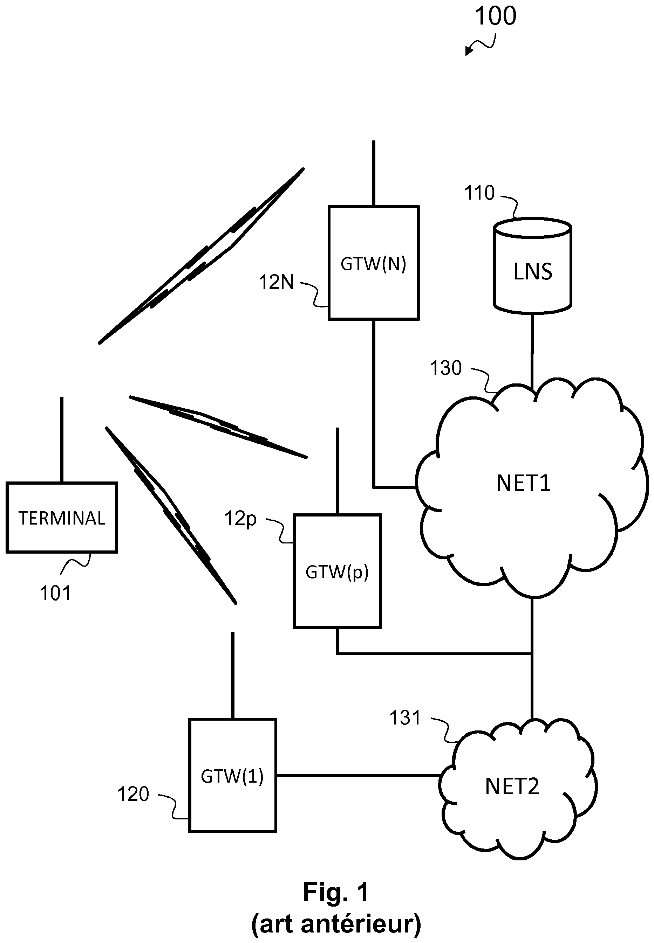

La **Fig. 1** illustre une architecture classique d'un réseau de communication permettant à un objet connecté 101
de communiquer avec un serveur central 110. La description ci-après met l'accent sur la norme *LoRa™* (norme publiée
par la « *LoRa Alliance* ») mais d'autres technologies de communications sont possibles. L'objet connecté, ou terminal,
101 est typiquement un dispositif électronique comprenant un émetteur radio. L'émetteur radio est adapté pour émettre
et recevoir des trames ou messages via une fréquence porteuse parmi une pluralité de fréquences porteuses comprises
dans une bande de fréquence prédéterminée, par exemple une bande fréquence ISM. Lorsque l'émetteur radio émet
une trame, celle-ci peut être reçue par un ou plusieurs des récepteurs radio ou passerelles 120, 12p,..., 12N (« N » étant
supérieur à « 0 » et « p » compris entre « 0 » et « N »). L'objet connecté 101 étant potentiellement mobile, contrairement
aux passerelles 120, 12p,..., 12N qui sont placées en des points fixes, une trame émise par l'objet connecté 101 peut
être reçue par une ou plusieurs passerelles 120, 12p,..., 12N. Chaque passerelle 120, 12p,..., 12N est connectée,
possiblement via un réseau et une technologie différente, à un serveur central 110 dit serveur LNS (« *LoRa Network
Server* » en anglais). Chaque passerelle 120, 12p,..., 12N recevant une trame en provenance de l'objet connecté 101
transmet ensuite cette trame vers le serveur central 110. Si une trame émise par l'objet connecté 101 est reçue par «m»
passerelles 120, 12p,..., 12N, alors le serveur central reçoit « m » exemplaires ou copies de cette même trame retransmise
par lesdites « m » passerelles (sauf problème de communication entre une passerelle et le serveur central 110 entraînant
une perte de trame). Il est à noter que chaque passerelle 120, 12p,..., 12N est connectée au serveur central 110 par un
réseau de communication qui peut être différent. Ainsi, comme illustré dans la Fig. 1, la passerelle 120, 12p,..., 12N est
connectée au serveur central 110 via le réseau 131 et le réseau 130, possiblement de technologie différente. Chaque
réseau de communication, par exemple les réseaux de communications 130 ou 131, permettant la connexion d'une
passerelle 120, 12p,..., 12N au serveur central 110 peut donc entraîner un retard de transmission des trames (ou latence)
différent, retard de transmission qui peut être lié à la technologie employée par le réseau de communication, mais aussi
possiblement à une congestion dudit réseau de communication. Le retard de transmission est typiquement de l'ordre
de la dizaine ou centaine de millisecondes, mais peut atteindre plusieurs secondes dans certains cas.

Quand le serveur central 110 reçoit une trame en provenance de l'objet connecté 101, la norme *LoRa™* définit
un délai de réponse (ci-après « RXDelay ») afin que le serveur central 110 puisse répondre, par l'envoi d'une trame, à
l'objet connecté 101. En effet, afin de réduire la consommation d'énergie, l'objet connecté 101 peut, suite à l'envoi d'une
trame, se mettre en veille, et ne se remettre à l'écoute d'une éventuelle réponse qu'à l'expiration du délai de réponse,
et ce pour un temps donné. Possiblement, la norme peut même définir plusieurs délais de réponses possibles (par
exemple « *RX1 Delay* » et « *RX2 Delay* » pour la norme *LoRa™*), l'objet connecté se mettant en écoute d'une possible
réponse à l'expiration de chaque délai pour un temps donné. La valeur du ou des délais de réponses est paramétrée
par un opérateur du réseau de communication. Typiquement, une valeur d'un délai de réponse est de l'ordre d'une ou
plusieurs secondes.

Chaque trame émise comprend un compteur (« *frame counter* » en anglais, ci-après « FcntUp »), la valeur du
compteur étant incrémentée à chaque émission d'une nouvelle trame par l'objet connecté 101. En l'absence de réponse
à une trame précédemment envoyée, l'objet connecté 101 peut réémettre ladite trame. Selon la norme *LoRa™,* la valeur
du compteur « FcntUp » pour la trame réémise est identique à celle de la trame précédemment émise. Dit autrement,
une trame et une trame réémise correspondante ont une même valeur du compteur « FcntUp ».

Lorsque l'objet connecté 101 est connecté à plus d'une seule passerelle 120, 12p,..., 12N, le serveur central
110 peut donc potentiellement recevoir plusieurs trames, retransmises par plusieurs passerelles 120, 12p,..., 12N, ces
trames comportant toutes un compteur avec la même valeur : chaque trame peut correspondre soit à un exemplaire de
la trame émise par l'objet connecté 101 ayant transité par une passerelle 120, 12p,..., 12N différente, soit à une possible réémission de la trame. A noter qu'une trame réémise peut-elle même être reçue en plusieurs exemplaires par le serveur central 110 si elle transite via plusieurs passerelles 120, 12p,..., 12N.

Lorsque le serveur central 110 a besoin d'émettre une trame vers l'objet connecté 101, par exemple en réponse à une trame émise par l'objet connecté, le serveur central 110 doit sélectionner une passerelle parmi les passerelles 120, 12p,..., 12N afin que cette passerelle sélectionnée émette la trame émise par le serveur central 110 vers l'objet connecté. Fréquemment, le serveur central 110 ne reçoit les trames émises par un objet connecté qu'à travers une seule passerelle (sens « *uplink* »). Le serveur central 110 sélectionne donc cette même passerelle pour l'émission d'une trame vers l'objet connecté (sens « *downlink* »). Lorsque le serveur central 110 reçoit plusieurs exemplaires ou copies d'une même trame émise par l'objet connecté 101 via différentes passerelles, sélectionner une passerelle parmi ces différentes passerelles disponibles n'est pas évident. Dans une première approche, le serveur central 110 sélectionne toutes les passerelles ayant transmis la trame reçue. Cette approche est loin d'être optimale puisqu'elle sollicite inutilement plusieurs passerelles et que l'objet connecté 101 reçoit plusieurs exemplaires d'une même trame. Dans une seconde approche, le serveur central 110 sélectionne la passerelle ayant transmis la trame qui a été reçue en premier par le serveur central 110. Cette approche n'est cependant pas optimale, puisqu'elle tend à favoriser la sélection de passerelles étant connectées au serveur central 110 par un réseau 130 ou 131 offrant une faible latence, permettant une transmission rapide des trames entre ces passerelles et le serveur central 110. Ces passerelles se trouvent par conséquent fréquemment sélectionnées et peuvent être congestionnées alors même que d'autres passerelles sont peu sollicitées.

Il est à noter de plus, qu'outre le fait que les bandes de fréquences utilisées par un réseau de communication illustré en Fig. 1 sont typiquement partagées par plusieurs opérateurs de réseaux, et doivent donc être économisées, chaque passerelle doit respecter des contraintes d'utilisation de ces bandes de fréquence. En effet, un mécanisme dit de « rapport cyclique » (« *Duty Cycle* ») est fréquemment mis en place afin de limiter l'utilisation de la bande passante par une passerelle. Ce mécanisme de « rapport cyclique » définit un ratio maximal du temps d'émission sur une période donnée pour une fréquence porteuse comprise dans la bande de fréquence. Ce ratio peut être défini par groupe de fréquences porteuses ou « sous-bandes ».

Il est à noter aussi qu'une norme telle la norme *LoRa*™ impose des contraintes sur le choix de la fréquence porteuse à utiliser par une passerelle sélectionnée pour l'émission d'une trame en réponse d'une trame émise par un objet connecté 101. Ainsi, lorsqu'un objet connecté 101 émet une trame, il attend soit une réponse dans une première fenêtre de réponse, soit une réponse dans une deuxième fenêtre de réponse. La première fenêtre de réponse est définie par exemple par un délai d'attente « *RXDelay1* » et la deuxième fenêtre de réponse par un délai d'attente « *RXDelay2* ». Une trame émise en réponse lors la première fenêtre de réponse doit être émise sur la même fréquence porteuse que la trame émise par l'objet connecté. Une trame émise en réponse lors la deuxième fenêtre de réponse doit être émise sur une fréquence porteuse prédéterminée.

Il est donc nécessaire de proposer un procédé permettant à un serveur central 110 de sélectionner une passerelle 120, 12p,..., 12N parmi une pluralité de passerelles possibles pour l'émission d'une trame vers un objet connecté, la passerelle respectant les différentes contraintes radios imposées.

L'invention concerne un procédé pour un système de communication comprenant un dispositif électronique et une pluralité de passerelles, le dispositif électronique et chaque passerelle étant adaptés pour émettre et recevoir des trames sur une bande de fréquence radio, chaque passerelle étant connectée à un même serveur central, une première trame étant émise par le dispositif électronique à destination du serveur central, la trame comprenant un identifiant du dispositif électronique, chaque passerelle recevant ladite trame et transmettant la trame reçue, en association avec un identifiant de la passerelle, vers le serveur central, un délai de réponse étant prédéfini pour répondre à la première trame, le procédé permettant la sélection par le serveur central d'une passerelle parmi la pluralité de passerelles pour émettre une deuxième trame vers le dispositif électronique en réponse à la première trame, le procédé étant exécuté par le serveur central et comprenant les étapes de :

- recevoir la première trame en provenance d'une première passerelle,
- déterminer un moment d'émission et une durée de la deuxième trame devant être émise en réponse,
- créer une liste en association avec l'identifiant du dispositif électronique, la liste comprenant l'identifiant de la première passerelle,
- déclencher un délai d'attente pendant lequel, si le serveur central reçoit une autre trame émise par le dispositif électronique en provenance d'une autre passerelle, alors :
- ajouter l'identifiant de l'autre passerelle ayant transmis la trame dans la liste,
- à l'expiration du délai d'attente, choisir au moins une passerelle dont l'identifiant est compris dans la liste, et, pour cette passerelle :
- retrouver des données de planification d'émission de trame par ladite passerelle, et,
- vérifier si des critères de sélection, fonctions du moment d'émission et de la durée de la deuxième trame ainsi que des données de planification d'émission de trames de la passerelle, sont remplis,

si les critères de sélection sont remplis, alors sélectionner ladite passerelle pour l'envoi de la deuxième trame en réponse à la première trame vers le dispositif électronique.

Avantageusement, le procédé permet à un serveur central, par exemple un serveur LNS, recevant plusieurs exemplaires d'une même trame envoyée par un dispositif électronique, de sélectionner une passerelle pour émettre en retour une trame de réponse. En effet, chaque exemplaire de la trame envoyée par le dispositif électronique ayant transité via une passerelle différente, le serveur central peut potentiellement répondre via toutes ces passerelles. Le procédé permet avantageusement la sélection d'une seule passerelle pour l'émission de la trame de réponse, ce qui réduit la consommation en bande passante en évitant d'envoyer ladite trame de réponse via toutes les passerelles disponibles. Le procédé permet de plus de s'assurer que la passerelle sélectionnée est en capacité de recevoir la trame de réponse et de la retransmettre vers le dispositif électronique dans les temps, c'est-à-dire dans le délai de réponse. Le procédé permet aussi de s'assurer de la sélection d'une passerelle dont les données de planification d'émission de trames sont compatibles avec la planification de l'émission de la trame de réponse pour cette passerelle.

Selon un mode de réalisation complémentaire de l'invention, chaque passerelle transmettant une trame reçue en association avec un identifiant de la passerelle et une indication sur la puissance de réception de la trame, lors de l'étape d'ajouter d'un identifiant d'une passerelle dans la liste, l'indication sur la puissance de réception est ajoutée en association avec l'identifiant de la passerelle, et, lors de l'étape de choisir une passerelle dans la liste, le choix est fonction de la puissance de réception associée à chaque identifiant.

Avantageusement, le procédé permet de sélectionner une passerelle dont le bilan de liaison avec le dispositif électronique garantit une bonne transmission de la trame de réponse.

Selon un mode de réalisation complémentaire de l'invention, si, pendant le délai d'attente, le serveur central reçoit une trame dont la puissance de réception est inférieure à une valeur prédéterminée, alors ladite trame est ignorée pour la suite du procédé.

Avantageusement, les passerelles dont le bilan de liaison avec le dispositif électronique est de mauvaise qualité sont éliminées de la procédure de sélection. Cela garantit que seule une passerelle dont la bilan de liaison est de qualité peut être sélectionnée.

Selon un mode de réalisation complémentaire de l'invention, les données de planification d'émission de trame pour chaque passerelle comprenant un paramètre, dit rapport cyclique, ledit paramètre étant un ratio maximal d'un temps passé par ladite passerelle à émettre des trames sur une période donnée, chaque passerelle de la liste étant successivement choisie pour vérifier les critères de sélection, l'étape de sélectionner la passerelle comprend une étape de détermination de la valeur du rapport cyclique au moment de l'émission de la deuxième trame pour une passerelle et en ce que la sélection est fonction de la valeur du rapport cyclique déterminée.

Avantageusement, le procédé prend en compte les contraintes de respect de rapport cyclique pour chaque passerelle.

L'invention concerne également un serveur central pour un système de communication comprenant un dispositif électronique et une pluralité de passerelles, le dispositif électronique et chaque passerelle étant adaptés pour émettre et recevoir des trames sur une bande de fréquence radio, chaque passerelle étant connectée au serveur central, une première trame étant émise par le dispositif électronique à destination du serveur central, la trame comprenant un identifiant du dispositif électronique, chaque passerelle recevant ladite trame et transmettant la trame reçue, en association avec un identifiant de la passerelle, vers le serveur central, un délai de réponse étant prédéfini pour répondre à la première trame, le serveur central étant adapté, afin de sélectionner une passerelle parmi la pluralité de passerelles pour émettre une deuxième trame vers le dispositif électronique en réponse à la première trame, pour :

- recevoir la première trame en provenance d'une première passerelle,
- déterminer un moment d'émission et une durée de la deuxième trame devant être émise en réponse,
- créer une liste en association avec l'identifiant du dispositif électronique, la liste comprenant l'identifiant de la première passerelle,
- déclencher un délai d'attente pendant lequel, si le serveur central reçoit une autre trame émise par le dispositif électronique en provenance d'une autre passerelle, alors :
- ajouter l'identifiant de l'autre passerelle ayant transmis la trame dans la liste,
- à l'expiration du délai d'attente, choisir au moins une passerelle dont l'identifiant est compris dans la liste, et, pour cette passerelle :
- retrouver des données de planification d'émission de trame par ladite passerelle, et,
- vérifier si des critères de sélection, fonctions du moment d'émission et de la durée de la deuxième trame ainsi que des données de planification d'émission de trames de la passerelle, sont remplis,

si les critères de sélection sont remplis, alors sélectionner ladite passerelle pour l'envoi de la deuxième trame en réponse à la première trame vers le dispositif électronique.

L'invention concerne également un système de communication comprenant un dispositif électronique et une pluralité de passerelles, le dispositif électronique et chaque passerelle étant adaptés pour émettre et recevoir des trames sur une bande de fréquence radio, chaque passerelle étant connectée à un même serveur central, une première trame étant émise par le dispositif électronique à destination du serveur central, la trame comprenant un identifiant du dispositif électronique, chaque passerelle recevant ladite trame et transmettant la trame reçue, en association avec un identifiant de la passerelle, vers le serveur central, un délai de réponse étant prédéfini pour répondre à la première trame, le serveur central étant adapté, afin de sélectionner une passerelle parmi la pluralité de passerelles pour émettre une deuxième trame vers le dispositif électronique en réponse à la première trame, pour :

- recevoir la première trame en provenance d'une première passerelle,
- déterminer un moment d'émission et une durée de la deuxième trame devant être émise en réponse,
- créer une liste en association avec l'identifiant du dispositif électronique, la liste comprenant l'identifiant de la première passerelle,
- déclencher un délai d'attente pendant lequel, si le serveur central reçoit une autre trame émise par le dispositif électronique en provenance d'une autre passerelle, alors :
- ajouter l'identifiant de l'autre passerelle ayant transmis la trame dans la liste,
- à l'expiration du délai d'attente, choisir au moins une passerelle dont l'identifiant est compris dans la liste, et, pour cette passerelle :
- retrouver des données de planification d'émission de trame par ladite passerelle, et,
- vérifier si des critères de sélection, fonctions du moment d'émission et de la durée de la deuxième trame ainsi que des données de planification d'émission de trames de la passerelle, sont remplis,

si les critères de sélection sont remplis, alors sélectionner ladite passerelle pour l'envoi de la deuxième trame en réponse à la première trame vers le dispositif électronique.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter tout ou partie des étapes des procédés mentionnées ci-dessous, lorsque ledit programme est exécuté par le processeur.

L'invention concerne également un support de stockage d'informations comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la **Fig. 1** illustre schématiquement une architecture classique d'un réseau de communication dit « réseau étendu à longue portée », typiquement conforme à une norme *LoRa*™ ;
- les **Figs. 2, 3 et 4** illustrent schématiquement un procédé permettant la sélection, par un serveur central d'un réseau de communication dit « réseau étendu à longue portée », d'une passerelle parmi une pluralité de passerelles pour émettre une trame vers un dispositif électronique en réponse à une trame émise par ce dispositif électronique, selon un premier mode de réalisation de l'invention ;
- la **Fig. 5** illustre schématiquement un procédé de mise à jour de données de planification d'émission de trames pour une passerelle comprise dans un réseau de communication dit « réseau étendu à longue portée », selon le premier mode de réalisation de l'invention ;
- la **Fig. 6** illustre schématiquement un procédé de vérification qu'une trame à émettre peut être insérée dans la planification de trames à émettre d'une passerelle, selon le premier mode de réalisation de l'invention ;
- la **Fig. 7** illustre schématiquement un procédé de vérification du respect d'un rapport cyclique pour la planification d'émission d'une trame par une passerelle, selon le premier mode de réalisation de l'invention ;
- la **Fig. 8** illustre schématiquement l'architecture matérielle d'un serveur adapté pour mettre en œuvre un procédé permettant de sélectionner une passerelle parmi une pluralité de passerelles pour l'émission d'une trame vers un dispositif électronique d'un réseau de communication dit « réseau étendu à longue portée », selon un mode de réalisation de l'invention ;
- la **Fig. 9** illustre schématiquement un procédé de mise à jour de données de planification d'émission de trames pour une passerelle comprise dans un réseau de communication dit « réseau étendu à longue portée », selon un deuxième mode de réalisation de l'invention ;
- la **FIG. 10** illustre schématiquement un procédé de vérification qu'une trame à émettre peut être insérée dans la planification de trames à émettre d'une passerelle, selon le deuxième mode de réalisation de l'invention.

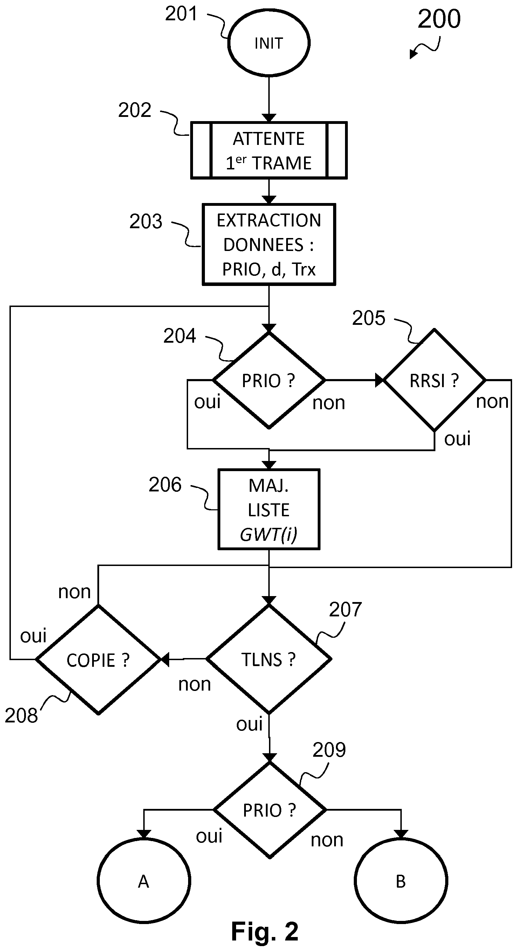

Le premier mode de réalisation de l'invention décrit ci-après correspond à un mode de réalisation dans lequel chaque passerelle ne peut émettre qu'une seule trame à la fois indépendamment du nombre de fréquences ou de sous-bandes de fréquences disponibles. Dit autrement, à partir du moment où une trame est planifiée pour émission sur une première fréquence comprise dans une sous-bande de fréquence, la passerelle ne peut pas simultanément émettre une autre trame sur une autre fréquence, que cette autre fréquence appartienne à la même sous-bande de fréquence ou non. Il n'est ainsi pas possible que deux trames se chevauchent, même partiellement, et ce indépendamment de la fréquence d'émission de chaque trame. Ce premier mode de réalisation est donc adapté à des passerelles peu coûteuses. Les descriptions des Figs. 2, 3, 4, 5, 6 et 7 correspondent à ce premier mode de réalisation de l'invention.

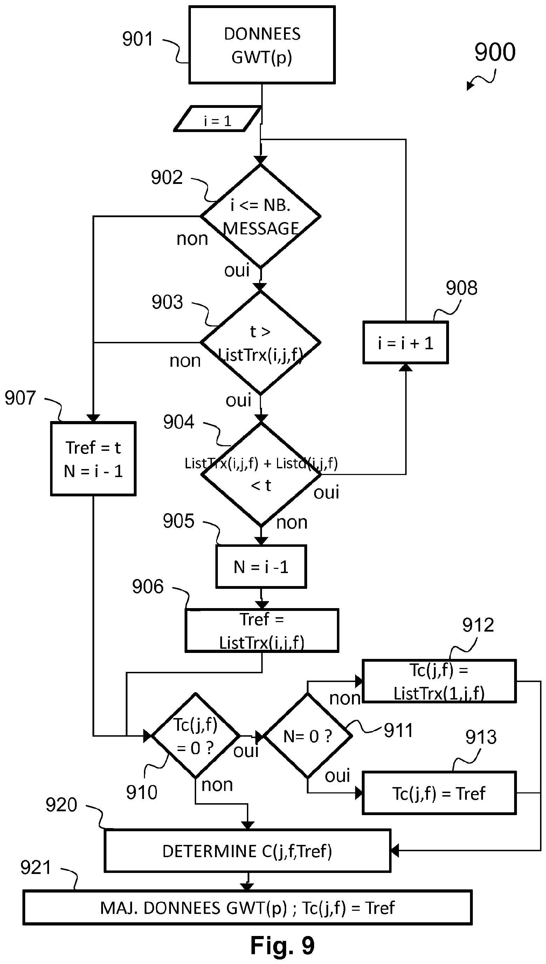

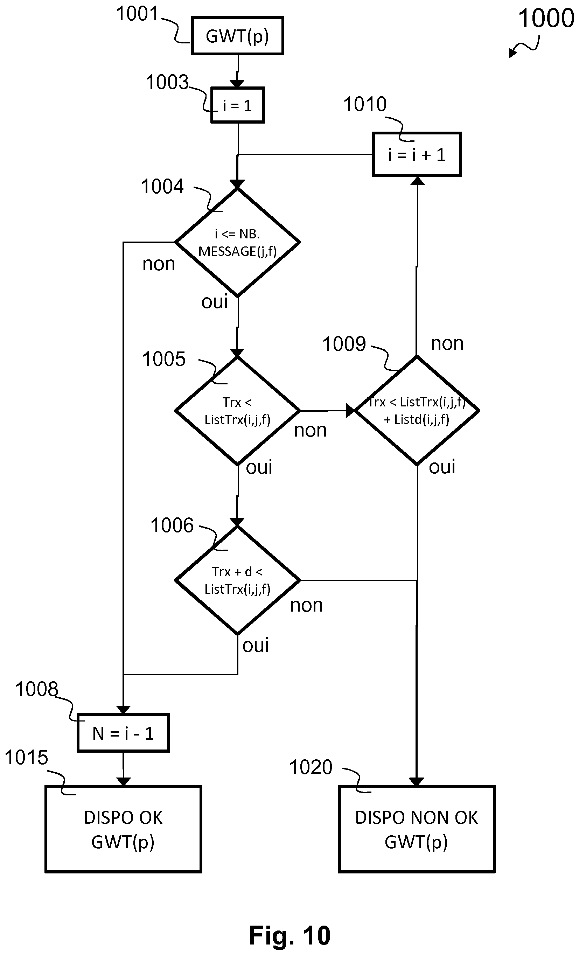

Dans le deuxième mode de réalisation de l'invention, chaque passerelle est capable d'émettre au moins deux messages en même temps, chaque message étant émis sur une fréquence différente. Chaque passerelle peut émettre au moins deux messages simultanément sur au moins deux fréquences différentes, les au moins deux fréquences étant possiblement comprises dans une même sous-bande de fréquence. Les descriptions des Figs. 9 et 10 correspondent au deuxième mode de réalisation de l'invention.

Les **Figs. 2, 3 et 4** illustrent schématiquement un procédé 200 permettant la sélection, par un serveur central 110 d'un réseau de communication 100 dit « réseau étendu à longue portée », d'une passerelle parmi une pluralité de passerelles 120, 12p,..., 12N pour émettre une trame vers un dispositif électronique 101 en réponse à une trame émise par ce dispositif électronique 101, selon le premier mode de réalisation de l'invention. Tout ou partie du procédé est exécuté par le serveur central 110.

L'étape 201 correspond à l'initialisation du serveur central 110, suite par exemple à sa mise sous tension. Lors de cette étape 201, le serveur central 110 est adapté pour charger dans une mémoire des instructions permettant l'exécution du procédé 200. Lors de l'étape 201, des connexions peuvent être établies avec les passerelles 120, 12p,..., 12N. Le serveur central 110 peut comprendre une fonction de synchronisation temporelle permettant à des passerelles parmi les passerelles 120, 12p,..., 12N de se synchroniser en temps. Le serveur central 110 peut comprendre une fonction de relais de synchronisation temporelle. Typiquement, le serveur central 110 est un serveur ou un relais NTP (« *Network Time Protocol* » en anglais) permettant aux passerelles 120, 12p,..., 12N connectées au serveur central 110 de bénéficier d'une synchronisation temporelle avec le serveur central 110. Le serveur central 110 peut lui-même se synchroniser auprès d'un serveur NTP (non représenté). Selon un mode de réalisation complémentaire, les passerelles 120, 12p,..., 12N se synchronisent en temps auprès d'un serveur NTP, possiblement le même que celui utilisé par le serveur central 110 pour se synchroniser. Selon un mode de réalisation complémentaire, les passerelles 120, 12p,..., 12N et/ou le serveur central 110 se synchronisent en temps via une technologie de type GPS (« *Global Positioning System»* en anglais) ou *Glonass.*

Dans une étape suivante 202, le serveur central 110 est en attente de la réception d'une première trame. La première trame correspond à une première trame émise par le dispositif électronique 101, reçue par une première passerelle parmi les passerelles 120, 12p,..., 12N et retransmise par ladite première passerelle vers le serveur central 110. La trame émise par le dispositif électronique 101 comprend un identifiant associé au dispositif électronique 101, ce qui permet au serveur central 110 de déterminer l'origine de la trame. Chaque passerelle, lorsqu'elle retransmet une trame, ajoute en complément à la trame retransmise un identifiant de la passerelle. Le serveur central 110 peut donc ainsi déterminer quelle passerelle est à l'origine de la retransmission d'une trame. La trame émise par le dispositif électronique 101 peut comprendre des données correspondant à un niveau de priorité de la trame, ou du niveau de priorité de la réponse attendue. Chaque passerelle, lorsqu'elle retransmet une trame, ajoute en complément à la trame retransmise un horodatage (« *timestamp* » en anglais) correspondant au temps de fin de la trame par la passerelle. En négligeant le temps de transmission de la trame entre le dispositif électronique 101 et chaque passerelle recevant la trame, le temps de fin de réception de la trame par la passerelle est considéré comme étant une excellente approximation d'un temps de fin d'émission de la trame par le dispositif électronique 101 (dit « Teum »). Il est considéré ci-après que le temps de fin d'émission de la trame « Teum » par le dispositif électronique 101 est pris égal au temps de fin de réception de la trame par la passerelle sélectionnée. Dit autrement, comme décrit ci-après, lorsque le serveur central 110 exécute le procédé permettant de déterminer si une passerelle donnée peut ou non émettre une trame, le temps de fin d'émission de la trame « Teum » est choisi égal au temps de fin de réception de la trame par ladite passerelle. Ce temps de fin de réception par la passerelle est donc noté ci-après « Teum ». Cet horodatage « Teum » correspond au temps de fin de réception de la trame par la passerelle. Chaque passerelle, lorsqu'elle retransmet une trame, ajoute une indication sur la puissance de réception de la trame retransmise, ci-après appelée RSSI (« *Received Strength Signal Indicator* » en anglais). Le RSSI peut correspondre à une mesure de la puissance du signal reçue par la passerelle. Le RSSI peut correspondre à la somme d'une mesure de la puissance du signal reçue par la passerelle, exprimée en dBm, et d'un rapport signal sur bruit, exprimé en dB (« *deciBel* »). Le rapport signal sur bruit, pour la trame reçue, est déterminé par la passerelle recevant la trame. L'unité « dBm » (ou « *deciBel milliwatts* ») correspond à un rapport de puissance en décibels (« *dB* ») entre la puissance reçue mesurée et une puissance de référence de « 1 » milliwatt (« 1 mW »).

Un délai de réponse, qui définit le délai entre la fin de l'émission d'une trame par le dispositif électronique et le début d'une fenêtre d'écoute par le dispositif électronique 101 d'une éventuelle réponse, peut être prédéfini. Ce délai de réponse est typiquement un paramètre configuré par un opérateur du réseau de communication 100. Deux ou plusieurs délais de réponses peuvent être définis, par exemple « *RXDelay1* » et « *RXDelay2* », chaque délai de réponse correspondant à l'ouverture d'une fenêtre de réception pendant une durée prédéterminée sur le dispositif électronique 101. Selon un mode de réalisation de l'invention, le délai de réponse est prédéfini et connu du serveur central 110. Selon un mode de réalisation alternatif de l'invention, une information sur le délai de réponse est comprise dans la trame émise par le dispositif électronique 101. Lorsque le serveur central 110 reçoit la première trame, le serveur central 110 détermine un horodatage du temps de réception de la première trame par le serveur central 110, par exemple en prenant le temps de fin de réception de la première trame. Cet horodatage, par le serveur central 110, du temps de réception de la première trame, plus précisément de la première copie reçue de la première trame, est noté ci-après « Trfcu ».

Dans une étape suivante 203, le serveur central 110 extrait des données de la première trame reçue. Le serveur central 110 détermine ainsi si une réponse doit être apportée à la première trame reçue et la priorité de ladite réponse. Dans le présent exemple décrit, deux niveaux de priorités sont considérés : « prioritaire » ou « non prioritaire ». Selon un autre mode de réalisation, plusieurs niveaux de priorités peuvent être définis. Inversement, selon un mode de réalisation alternatif, toutes les trames sont traitées avec un même niveau de priorité, correspondant par exemple au niveau « prioritaire » ou au niveau « non prioritaire » comme décrit ci-après. Le serveur central 110 détermine aussi la durée « d » d'une réponse attendue, c'est-à-dire la durée d'une deuxième trame à émettre en réponse à la première trame. Le serveur central 110 peut, pour déterminer la durée de la deuxième trame à émettre en réponse, déterminer la réponse seul ou devoir se connecter à un autre serveur, afin par exemple de retrouver une information demandée ou qu'une opération de calcul soit réalisée par un serveur dédié à cette tâche.

Dans le cas où une réponse est attendue par le dispositif électronique 101, dans une étape 204, le serveur central 110 détermine si la réponse attendue est considérée comme prioritaire ou non.

Dans le cas où la deuxième trame est non prioritaire, le serveur central 110 passe à l'étape 205. Dans le cas où la deuxième trame est prioritaire, le serveur central 110 passe à l'étape 206.

Dans l'étape 205, le serveur central 110 compare le RSSI de la trame reçue avec un seuil prédéterminé. Si le RSSI est inférieur au seuil, alors la trame est ignorée. Ainsi, dans le cas où le RSSI est supérieur au seuil prédéterminé, le serveur central 110 passe à l'étape 206. Dans le cas où le RSSI est inférieur au seuil prédéterminé, le serveur central 110 passe à l'étape 207. Dit autrement, dans le cas d'une réponse non prioritaire, les premières trames reçues avec un RSSI faible ne sont pas prises en compte, c'est-à-dire qu'une passerelle ayant reçu une première trame avec un niveau de RSSI trop faible (c'est-à-dire inférieur au seuil prédéterminé) ne pourra pas être sélectionnée ensuite pour l'envoi d'une réponse.

Dans une étape 206, le serveur central 110 enregistre en mémoire l'identifiant de la passerelle ayant retransmis la première trame en association avec l'identifiant du dispositif électronique 101. Dit autrement, le serveur central 110 crée ou complète une liste, en association avec le dispositif électronique 101, comprenant l'identifiant de la passerelle ayant retransmis la première trame. La liste peut comprendre, en association avec l'identifiant de chaque passerelle, le RSSI correspondant à la première trame reçue par la passerelle. Le serveur central 110 peut gérer plusieurs listes en parallèle, chaque liste correspondant à un dispositif électronique différent. Lors d'une itération de l'étape 206, le serveur central 110 peut compléter la liste, pour un dispositif électronique 101, avec un identifiant correspondant à une passerelle ayant retransmis la première trame vers le serveur central 110. Possiblement, lorsque la liste est mise à jour par le serveur central 110, le serveur central 110 peut ordonner la liste suivant un critère prédéterminé. Possiblement, les éléments constituant la liste sont ordonnés suivant un critère de RSSI décroissant. Le premier élément de la liste correspond alors à une passerelle ayant reçu la première trame avec le RSSI le plus élevé. Le premier élément de la liste correspond donc, *a priori,* à une passerelle ayant la meilleure qualité de communication avec le dispositif électronique 101.

Dans une étape suivante 207, le serveur central 110 détermine le temps écoulé depuis le temps de réception de la première trame, lors de l'étape 202, et le temps courant ou présent du serveur central 110. Si ce temps écoulé est supérieur à un délai prédéfini, appelé « temps LNS», alors le serveur central 110 passe à l'étape 209. Sinon, le serveur central 110 passe à l'étape 208.

Durant l'étape 208, le serveur central 110 est en attente de la réception d'une copie de la première trame émise par le dispositif électronique 101 et retransmise par une autre passerelle. Selon un mode de réalisation alternatif, le serveur central 110 est en attente d'une trame quelconque émise par le dispositif électronique 101, sans que nécessairement la trame soit la première trame. Si une nouvelle trame est reçue, alors le serveur central 110 recommence le procédé à l'étape 204, c'est-à-dire à l'étape 206 dans le cas d'une trame prioritaire et à l'étape 205 dans le cas d'une trame non prioritaire. Sinon, le serveur central 110 vérifie, lors de l'étape 207, que le délai « temps LNS » n'est pas écoulé. Ainsi, par l'itération des étapes 208, 204, éventuellement 205, 206 et 207, le serveur central 110 constitue une liste, associée à l'identifiant du dispositif électronique, la liste comprenant les différentes passerelles ayant retransmis la première trame, ou une copie de la première trame. Ces passerelles constituent les passerelles candidates pour la sélection d'une passerelle pour l'émission d'une deuxième trame en réponse à la première trame.

Il est à noter que dans le cas d'une trame non prioritaire, la liste peut, après l'expiration du délai « temps LNS », être vide. Dans ce cas, aucune réponse ne sera donnée à la première trame. C'est le cas si tous les exemplaires de la première trame ont été reçus avec un RSSI trop faible (c.-à-d. inférieur à un seuil prédéfini). En effet, pour des raisons de préservation de la bande passante, on peut considérer qu'il est inutile, pour une trame non prioritaire, d'émettre une trame en réponse vers le dispositif électronique 101 si aucune passerelle n'a reçu la première trame avec un RSSI suffisant, la trame émise en réponse ayant peu de chances d'être correctement reçue quelle que soit la passerelle sélectionnée.

Dans le cas d'une trame prioritaire, la liste comprend toujours *a minima* la passerelle ayant retransmis la première trame lors de l'étape 202, plus éventuellement d'autres passerelles si d'autres copies de la première trame ont été reçues lors de l'étape 208.

Dans le cas d'une trame non prioritaire, la liste peut comprendre la passerelle ayant retransmis la première trame lors de l'étape 202, et éventuellement d'autres passerelles si d'autres copies de la première trame ont été reçues lors de l'étape 208, seules celles pour lesquelles le RSSI est supérieur à un seuil prédéfini étant retenues dans la liste.

Après l'expiration du délai « temps LNS », le serveur central 110 passe à l'étape 209.

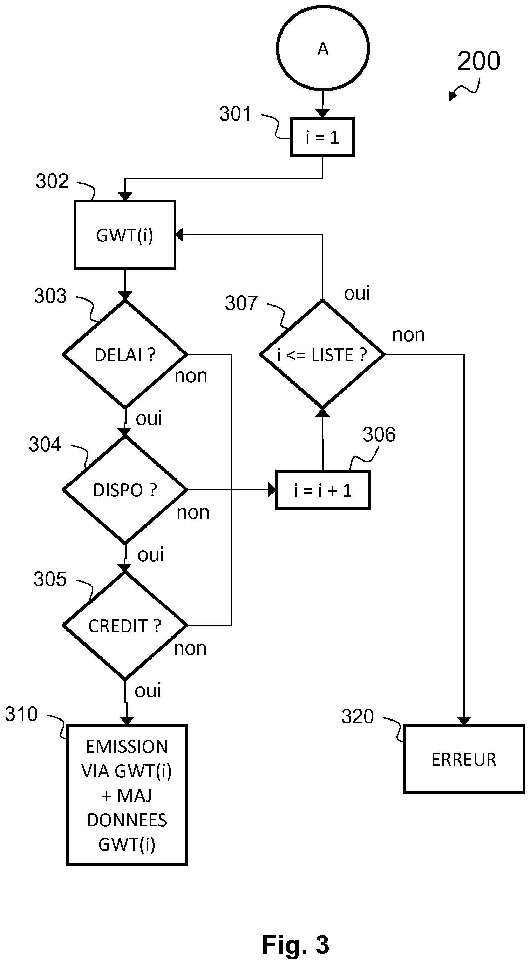

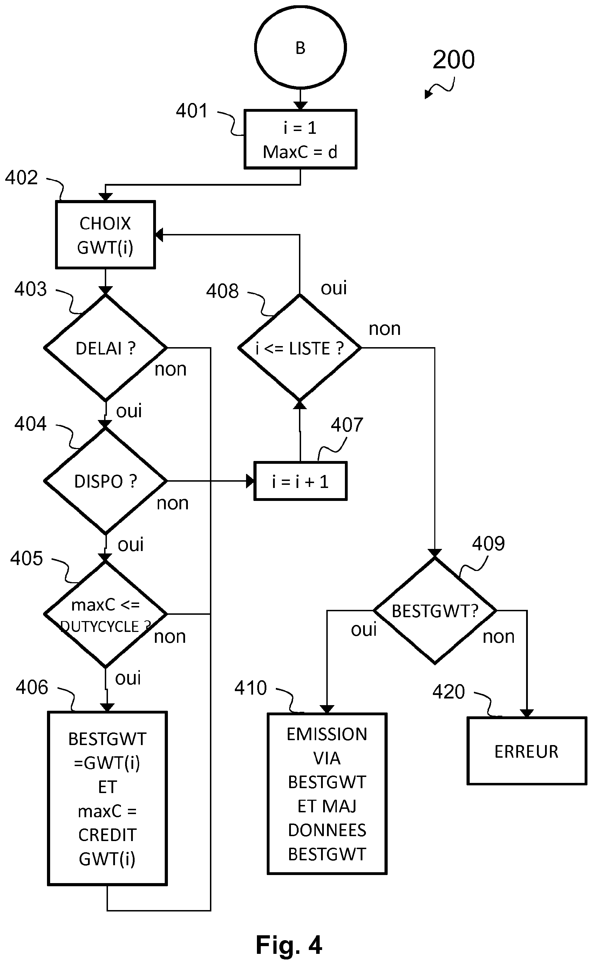

Dans l'étape 209, le serveur central 110 détermine si la deuxième trame à émettre en réponse à la première trame est prioritaire. Si oui, le serveur central 110 passe à l'étape 301, la suite des étapes étant décrite dans la Fig. 3. Si non, le serveur central 110 passe à l'étape 401, la suite des étapes étant décrite dans la Fig. 4.

Dans les deux cas, le serveur central 110 peut accéder à des données de planification d'émission de trames par une passerelle, et ce pour chaque passerelle 120, 12p,..., 12N. Ces données sont par exemple enregistrées sur une mémoire du serveur central 110. Possiblement, ces données sont enregistrées sur chaque passerelle 120, 12p,..., 12N, le serveur central 110 pouvant retrouver ces données sur chaque passerelle 120, 12p,..., 12N. Ces données de planification d'émission de trame par la passerelle « p » peuvent correspondre à une liste « ListTrx » et à une liste « Listd », chaque liste étant associée à ladite passerelle. Le serveur central 110 conserve, pour chaque passerelle 120, 12p,..., 12N, une liste (ou matrice) « ListTrx » et une liste (ou matrice) « Listd » correspondante. La liste « ListTrx » correspond à une liste des temps d'émission de trames planifiées pour l'émission par la passerelle et la liste « Listd » comprend, pour chaque trame planifiée dans la liste « ListTrx », un temps d'émission de ladite trame. Dit autrement, pour chaque passerelle 120, 12p,..., 12N, le serveur central 110 tient à jour deux listes. La première liste, « ListTrx », comprend les temps d'émission des trames que la passerelle doit émettre, et, dans une deuxième liste « Listd », le temps d'émission de ladite trame. Ainsi, le serveur central 110 tient à jour, pour chaque passerelle 120, 12p,..., 12N, la planification des trames à émettre. Ainsi, pour une passerelle donnée, « ListTrx(j, k) » correspond au temps d'émission de la « j »-ème trame à émettre sur la sous-bande de fréquence « k » par ladite passerelle et « Listd(j, k) » à la durée de ladite « j »-ème trame pour la sous-bande de fréquences « k ». Le serveur central 110 enregistre autant de couples de listes «ListTrx» et « Listd » qu'il y a de passerelles 120, 12p,..., 12N, c'est-à-dire ici « N » couples de listes « ListTrx » et « Listd ». Chaque couple correspond aux données de planification d'émission de trames d'une passerelle donnée. De même, on note « ListTrx(k) » la liste (ou vecteur) comprenant tous les temps d'émission des trames planifiées sur la sous-bande de fréquence « k ». On note aussi « Listd(k) » la liste (ou vecteur) des durées de transmission de toutes les trames planifiées sur la sous-bande de fréquence « k ».

Dans le cas où la deuxième trame à émettre en réponse à la première trame est prioritaire, le serveur central 110 exécute les étapes 301 à 310 ou 320 du procédé 200 illustrées dans la **Fig. 3.** Ces différentes étapes, décrites ci-après, permettent de choisir au moins une passerelle dont l'identifiant est compris dans la liste, et, pour cette passerelle :

- retrouver des données de planification d'émission de trames par ladite passerelle, et,
- vérifier si des critères de sélection, fonctions du moment d'émission et de la durée de la deuxième trame ainsi que des données de planification d'émission de trames de la passerelle, sont remplis, et,

si les critères de sélection sont remplis, alors le serveur central 110 sélectionne ladite passerelle pour l'envoi de la deuxième trame en réponse à la première trame vers le dispositif électronique.

Ainsi, dans une étape 301, le serveur central 110 initialise un compteur « i » à la valeur « 1 ».

Dans une étape suivante 302, le serveur central 110 choisit la passerelle « i » dans la liste élaborée lors de l'étape 206. Dit autrement, lors de la première itération, « i » étant égal à « 1 », le serveur central 110 choisit la première passerelle de la liste. Possiblement, cette première passerelle est celle ayant le RSSI le plus élevé comme décrit précédemment. Le serveur central 110 retrouve, pour la passerelle « i », des données de planification d'émission de trames par la passerelle « i ». Ces données de planification d'émission de trames correspondent par exemple au couple « ListTrx » et « Listd » pour la passerelle « i ».

Dans une étape suivante 303, le serveur central 110 détermine s'il reste suffisamment de temps pour que la deuxième trame à émettre soit transmise à la passerelle « i » pour émission. Pour cela, le serveur central 110 détermine la valeur de la somme « S » suivante :

$$S = Trfcu + temps\ LNS + temps\ procédé + temps\ de\ transmission,$$

avec :

« Trfcu » : paramètre correspondant à l'horodatage, par le serveur central 110, du temps de réception de la première trame, plus précisément de la première copie reçue de la première trame,

« temps LNS » : paramètre correspondant à un délai prédéfini d'attente pour la réception d'éventuelles copies de la première trame ; correspond au test de l'étape 207,

« temps procédé » : paramètre correspondant à un délai prédéfini. Ce délai prédéfini correspond à une estimation, possiblement majorée, du temps d'exécution du procédé 200, auquel est soustrait le délai « temps LNS » (pour ne pas le compter deux fois). Dit autrement, temps estimé du procédé de sélection d'une passerelle une fois que le délai « temps LNS » est expiré,

« temps de transmission » : paramètre correspondant au délai de transmission d'une trame émise par le serveur central 110 vers la passerelle « i ».

L'horodatage « Trfcu » est déterminé lors de l'étape 202. La valeur de « temps LNS » est prédéfinie. « Temps procédé » est une estimation du temps nécessaire à l'exécution du procédé de sélection d'une passerelle une fois l'étape 209 atteinte. « temps de transmission » correspond au délai nécessaire pour qu'une deuxième trame soit transmise depuis le serveur central 110 vers la passerelle « i ». Dit autrement, « temps de transmission » correspond à la durée de parcours d'une deuxième trame depuis le serveur central 110 jusqu'à la passerelle « i ». Selon le mode de réalisation, le paramètre « temps de transmission » peut correspondre à une valeur moyenne du temps de parcours entre le serveur central 110 et la passerelle « i ». Cette valeur moyenne peut être déterminée en utilisant un horodatage de trames d'acquittement envoyées par la passerelle « i » lorsque le serveur central 110 envoie une trame. Le serveur central 110 peut alors déterminer une durée du parcours aller-retour en faisant la différence entre un horodatage du temps d'émission d'une trame et un horodatage d'une trame reçue en acquittement. Le serveur central 110 peut déterminer une moyenne mobile pondérée ou bien exponentielle des temps de parcours pour déterminer *in fine* une valeur de « temps de transmission » pour chaque passerelle « i ». Une valeur par défaut peut être utilisée.

La somme « S » correspond à une estimation du plus proche moment d'émission possible par la passerelle « i » de la deuxième trame. Il est donc nécessaire de s'assurer que ce plus proche moment d'émission soit bien antérieur au temps d'ouverture de la fenêtre de réception pour le dispositif électronique 101. Une fois la somme « S » de ces paramètres déterminée, le serveur central 110 compare donc cette somme « S » avec l'horodatage du temps d'ouverture de la fenêtre de réception du dispositif électronique 101, appelé ci-après « Trx »,dont une estimation est donnée par :

$$Trx = Teum + RXDelay,$$

avec :

- « Teum » : temps de fin de réception de la trame par la passerelle « i », qui est utilisée dans le procédé comme étant une estimation du temps de fin d'émission de la première trame par le dispositif électronique 101. En effet, ce temps de fin d'émission de la première trame par le dispositif électronique 101 n'est pas directement connu.
- « RXDelay » : délai de réponse, précédemment décrit.

Selon un mode de réalisation complémentaire de l'invention, plusieurs valeurs du temps de réponse « RXDelay1 » et « RXDelay2 » peuvent être utilisées par le procédé 200. Le procédé 200 doit donc être exécuté une première fois avec la valeur du délai de réponse égale à « RXDelay1 » (la valeur de « RXDelay1 » étant inférieure à celle de « RXDelay2 »), puis, si aucune passerelle ne peut être sélectionnée (c'est-à-dire étape 320 ou 420), le procédé 200 doit être repris à partir de l'étape 209 avec la valeur du délai de réponse égale à « RXDelay2 » au lieu de « RXDelay1 ». Plusieurs valeurs du temps de réponse peuvent ainsi être possiblement utilisées, le procédé étant repris à l'étape 209 avec un nouveau temps de réponse si aucune passerelle ne peut être sélectionnée pour une valeur donnée du temps de réponse.

Si la somme « S » est inférieure à « Trx », cela signifie qu'une deuxième trame peut bien être envoyée à la passerelle « i » pour émission à temps pour que la passerelle puisse émettre la deuxième trame à l'ouverture de la fenêtre de réception du dispositif électronique 101.

Si la somme « S » est supérieure à « Trx », cela signifie qu'une deuxième trame ne peut pas être envoyée à la passerelle « i » pour que cette trame puisse être émise à temps pour l'ouverture de la fenêtre de réception du dispositif électronique 101. Dit autrement, la passerelle « i » n'est pas en mesure d'émettre la deuxième trame dans la fenêtre de réception du dispositif électronique 101, le serveur central 110 n'étant pas en mesure de lui transmettre dans les temps.

Il est à noter que la valeur de « temps LNS », correspondant au délai prédéfini d'attente pour la réception d'éventuelles copies de la première trame, est prédéfinie et choisie de manière à ce qu'un « temps de transmission » de valeur moyenne puisse permettre l'envoi d'une deuxième trame vers une passerelle dans les temps.

L'étape 303 permet donc de vérifier si, dans l'hypothèse où la passerelle « i » est sélectionnée à l'issue du procédé 200, le serveur central 110 peut bien transmettre la deuxième trame à ladite passerelle « i » dans les temps pour que la passerelle « i » puisse émettre la deuxième trame pendant la fenêtre de réception du dispositif électronique 101.

Si ce n'est pas le cas, cela signifie que la passerelle « i » ne peut pas être sélectionnée et le serveur central 110 passe à l'étape 306. Si c'est le cas, le serveur central 110 passe à l'étape 304 afin de vérifier une autre condition pour que la passerelle « i » soit sélectionnée.

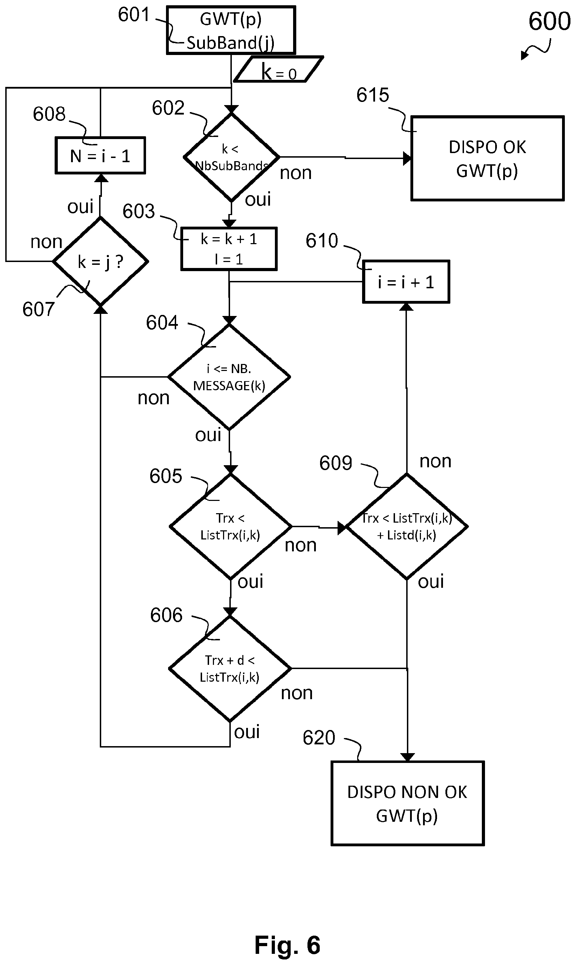

Dans l'étape 304, décrite plus en détails ci-après dans la Fig. 6, le serveur central 110 détermine si la passerelle « i » est en mesure d'émettre une deuxième trame lors de la fenêtre de réception du dispositif électronique 101. Dans cette étape 304, le serveur central 110 vérifie qu'aucune autre trame déjà planifiée pour émission par la passerelle « i » sur une fréquence quelconque ne vient en collision ou chevauchement avec la deuxième trame. Dit autrement, le serveur central 110 vérifie qu'il est possible d'insérer la deuxième trame dans les données de planification de trames sans provoquer une collision entre deux trames. Par collision, on entend, à un temps donné, le besoin d'émettre deux trames différentes par une même passerelle, ce qui n'est pas gérable par ladite passerelle.

Si la deuxième trame ne vient pas en collision avec une trame précédemment planifiée pour émission par la passerelle « i », alors le serveur central 110 passe à l'étape 305. Dans le cas contraire, cela signifie que la passerelle « i » ne peut pas être sélectionnée et le serveur central 110 passe à l'étape 306.

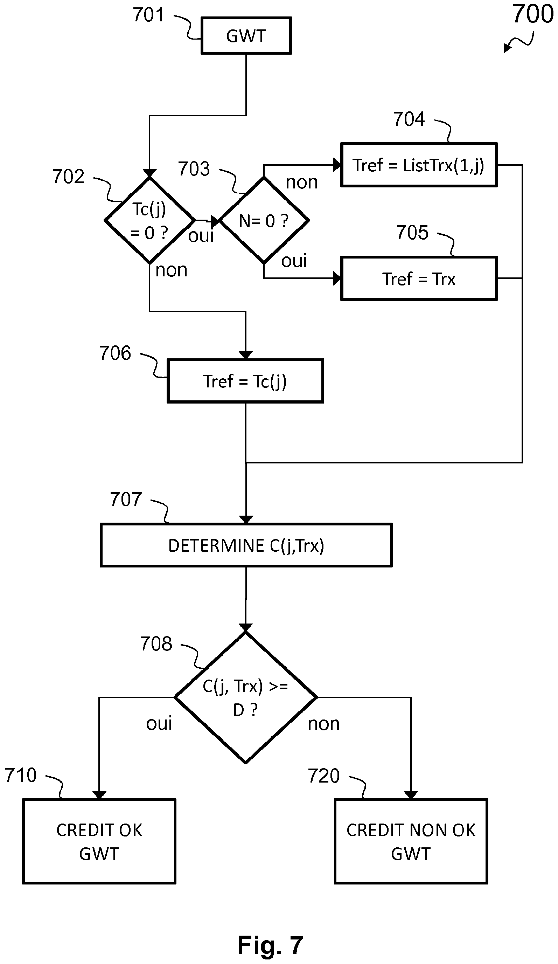

Dans l'étape 305, le serveur central 110 détermine si la planification de la deuxième trame pour émission par la passerelle « i » permet à ladite passerelle de respecter un éventuel rapport cyclique (« *duty cycle* » en anglais) qui serait imposé sur la fréquence d'émission à utiliser pour l'émission de la deuxième trame. Dit autrement, lors de cette étape 305, le serveur central 110 vérifie que la passerelle dispose de suffisamment de temps en termes de rapport cyclique (« *duty cycle* ») pour émettre la deuxième trame de durée « d ». Cette étape 305 est décrite ci-après plus en détails dans la Fig. 7. Si le serveur central 110 détermine que la planification de l'émission de la deuxième trame ne remet pas en cause le respect par la passerelle « i » d'un rapport cyclique, alors le serveur central 110 passe à l'étape 310. Sinon, cela signifie que la passerelle « i » ne peut pas être sélectionnée et le serveur central 110 passe à l'étape 306.

Lors de l'étape 310, le serveur central 110 sélectionne la passerelle « i » pour l'émission de la deuxième trame en réponse à la première trame émise par le dispositif électronique 101. Les données de planification d'émission de trames pour la passerelle « i » sont mises à jour pour intégrer les données concernant la deuxième trame, c'est-à-dire :

- insertion de la deuxième trame dans les listes « ListTrx » et « Listd » à une position «j» correspondant au temps d'émission planifié, c'est-à-dire entre une trame planifiée antérieurement et une trame planifiée postérieurement, si elles existent,
- « ListTrx(j, k) », avec « j » correspondant à la position de la trame, position dépendante du temps d'émission planifié, et « k » correspondant à la sous-bande de fréquence comprenant la fréquence d'émission de la trame, a pour valeur « Trx » (c'est à dire « Teum + RXDelay »),
- « Listd(j,k) », avec « j » correspondant à la position de la trame, position dépendante du temps d'émission planifié, et « k » correspondant à la sous-bande de fréquence comprenant la fréquence d'émission de la trame, a pour valeur « d ».

Le procédé 200 prend fin après l'étape 310. Le procédé 200 est exécuté de nouveau lors de la réception d'une nouvelle première trame en provenance du dispositif électronique 101. Une autre instance du procédé 200 peut être exécutée par le serveur central 110 si celui-ci reçoit une première trame en provenance d'un autre dispositif électronique. Il est alors nécessaire de sélectionner, en parallèle, une autre passerelle, possiblement la même, pour l'éventuelle émission d'une réponse vers l'autre dispositif électronique.

Dans l'hypothèse où l'une des contraintes vérifiées lors des étapes 303, 304 et 305 n'est pas vérifiée par le serveur central 110, le serveur central 110 passe à l'étape 306. L'étape 306 correspond à l'incrémentation de la valeur de « i », c'est-à-dire au choix de la passerelle suivante dans la liste établie lors de l'étape 206. L'étape 307 correspond à une vérification qu'il reste bien une passerelle à vérifier (étapes 303, 304 et 305) dans la liste. Si toutes les passerelles de la liste ont été passées en revue par le serveur central 110, c'est-à-dire si « i » est supérieur au nombre d'éléments de la liste, alors le serveur central 110 passe à l'étape 320. Sinon, le serveur central 110 reprend le procédé 200 à l'étape 302 avec la passerelle suivante dans la liste afin de vérifier si cette passerelle remplit les contraintes vérifiées lors des étapes 303, 304 et 305. Il est à noter que toutes les passerelles ne sont pas forcément vérifiées (c'est-à-dire que le serveur central 110 n'exécute pas les étapes 303 à 305) dès lors qu'une passerelle remplit les contraintes. Le procédé permet donc une sélection rapide de la passerelle.

L'étape 320 correspond à la fin du procédé 200, aucune passerelle n'ayant été sélectionnée. Le serveur central 110 ne peut pas alors émettre de deuxième trame. Possiblement, le serveur central 110 enregistre dans un journal d'événement (« *log* » en anglais) l'échec de la sélection d'une passerelle. Un message d'erreur peut être émis vers un serveur.

Ainsi, dans l'hypothèse où la liste de passerelles établie lors de l'étape 206 est ordonnée suivant l'ordre décroissant des RSSI associés, le procédé détaillé dans la Fig. 3 permet de sélectionner la passerelle remplissant les contraintes d'émission et disposant du meilleur RSSI pour l'émission de la deuxième trame. Ce procédé est utilisé par le serveur central 110 pour la sélection d'une passerelle pour l'émission d'une trame prioritaire.

La **Fig. 4** détaille la suite du procédé 200, après l'étape 209, lorsque la trame à émettre est non prioritaire. Le procédé détaillé dans la Fig. 4, destiné au cas d'une trame non prioritaire, se distingue du procédé détaillé dans la Fig. 3, destiné au cas d'une trame prioritaire en ce que toute les passerelles comprises dans la liste sont vérifiées, et que la passerelle sélectionnée *in fine* est celle remplissant les contraintes d'émission et disposant du plus grand crédit en termes de rapport cyclique, c'est-à-dire dont la valeur de rapport cyclique est la plus élevée au moment de l'émission. Il est à noter aussi que la liste établie lors de l'étape 206 ne comprend pas de passerelle dont le RSSI est inférieur à une valeur prédéfinie (cf. étape 205) dans le cas d'une trame non prioritaire.

Dans une étape 401, suite à l'étape 209, dans le cas d'une trame non prioritaire, le serveur central 110 définit une variable « i », initialisée avec la valeur « 1 » et une variable « maxC », initialisée avec la valeur « d », correspondant à la durée de la deuxième trame à émettre. Le serveur central 110 passe ensuite à l'étape 402.

Dans l'étape 402, le serveur central 110 retrouve les données de planification d'émission de trames pour la passerelle « i ». Le serveur central 110 passe ensuite à l'étape 403.

L'étape 403 est similaire à l'étape 303. Lors de cette étape, le serveur central 110 détermine si le serveur central 110 est en mesure de transmettre dans les temps la deuxième trame à la passerelle « i ». La description de l'étape 303 s'applique *mutatis mutandis*. Si le serveur central 110 est en mesure de transmettre dans les temps la deuxième trame à la passerelle « i », le serveur central 110 passe à l'étape 404. Sinon, le serveur central 110 passe à l'étape 407.

L'étape 404 est similaire à l'étape 304 et est décrite plus en détails dans la Fig. 6. Lors de cette étape, le serveur central 110 détermine si le serveur central 110 est en mesure de planifier l'émission de la deuxième trame par la passerelle « i » sans provoquer de collision d'émission de trame avec une trame précédemment planifiée. Si c'est le cas, le serveur central 110 passe à l'étape 405. Sinon, le serveur central 110 passe à l'étape 407.

L'étape 405 est similaire à l'étape 305 et est décrite plus en détails dans la Fig. 7, à l'exception du test pratiqué par le serveur central 110 en fin d'étape. Lors de cette étape, le serveur central 110 détermine si la passerelle est en mesure d'émettre la deuxième trame tout en respectant un éventuel rapport cyclique (« *duty cycle* »). Toutefois, afin de sélectionner *in fine* la passerelle « i » ayant un crédit de rapport cyclique le plus grand possible à l'issue des étapes 402 à 409, le serveur central 110 compare la valeur de « maxC » avec le rapport cyclique de la passerelle « i » à la fin de l'étape 405. Ainsi, la passerelle « i » ne devient, lors de l'étape 406, la possible candidate à être la passerelle sélectionnée par le procédé 200 que si elle dispose d'un crédit de rapport cyclique supérieur au crédit de rapport cyclique de la précédente passerelle candidate à être sélectionnée, lequel crédit est mémorisé dans la variable « maxC ». La précédente passerelle candidate à être sélectionnée est celle dont l'identifiant est mémorisé dans la variable « BestGwt ». Si le crédit de rapport cyclique de la passerelle « i » (« C(j, Trx) », avec « j » correspondant à la sous-bande de fréquence comprenant la fréquence sur laquelle la deuxième trame doit être émise, comme décrit ci-après) est supérieur au crédit de rapport cyclique de la précédente passerelle candidate à être sélectionnée, c'est-à-dire « maxC », le serveur central 110 passe à l'étape 406. Sinon, le serveur central 110 passe à l'étape 407.

Dans une étape 407, la variable « i » est incrémentée (« i = i+1 »). Le serveur central 110 passe ensuite à l'étape 408 afin de vérifier que la valeur de « i » n'a pas dépassé le nombre d'éléments compris dans la liste. Si « i » correspond à une passerelle de la liste, alors le serveur central 110 reprend le procédé à l'étape 402 avec la nouvelle valeur de la variable « i ». Dit autrement, les étapes 403 à 405 ou 406 sont répétées pour la passerelle suivante dans la liste. Si la valeur dépasse le nombre d'éléments dans la liste, cela indique que toutes les passerelles de la liste sont passées par les étapes 402 à 405 ou 406. Le serveur central 110 passe alors à l'étape 409.

Dans l'étape 406, le serveur central 110 garde en mémoire la passerelle « i », celle-ci étant candidate à devenir la passerelle sélectionnée. Dit autrement, le serveur central 110 conserve en mémoire, dans une variable « BestGwt », l'identifiant de la passerelle « i ». Lors de cette même étape, le serveur central 110 met à jour la variable « maxC » avec la valeur du rapport cyclique calculé lors de l'étape 405 pour la passerelle « i » pour la fréquence porteuse « j » (ou sous-bande si les fréquences porteuses sont regroupées en sous-bandes) au temps d'émission planifié « Trx » de la deuxième trame. Dit autrement, « *maxC = C(j, Trx)* », avec :

> « C » la fonction de rapport cyclique pour la passerelle donnée « i »,
> « j » la sous-bande considérée, la sous-bande « j » comprenant la fréquence porteuse d'émission de la deuxième trame, et,
> « Trx » le temps d'émission de la deuxième trame, c'est-à-dire le temps d'ouverture de la fenêtre de réception du dispositif électronique 101.

Dans une étape 408, le serveur central 110 détermine que toutes les passerelles de la liste sont passées par les étapes 402 à 405 ou 406, c'est-à-dire que le serveur central 110 a exécuté ces étapes pour toutes les valeurs de « i » correspondant à un élément de la liste. Le serveur central 110 passe alors à une étape 409.

Dans l'étape 409, le serveur central 110 détermine la valeur de la variable « BestGwt », qui correspond alors à l'identifiant de la passerelle parmi toutes les passerelles de la liste qui :

- répond aux contraintes d'émission de la trame (non collision, deuxième trame transmise à temps et rapport cyclique suffisant), et,
- est associé au crédit de rapport cyclique le plus grand.

Ce dernier critère permet, pour une trame non prioritaire, de sélectionner la passerelle pouvant émettre la deuxième trame disposant du plus grand crédit en termes de rapport cyclique, ce critère étant strict. Les passerelles avec peu de rapport cyclique sont donc préservées. Ainsi, si la variable « BestGwt » comprend la valeur d'un identifiant d'une passerelle, alors, dans une étape 410, similaire à l'étape 310 précédemment décrite, la passerelle correspondant à cet identifiant est sélectionnée. Sinon, dans une étape 420, similaire à l'étape 320, le serveur central 110 n'est pas en mesure de sélectionner une passerelle ; un message d'erreur est généré.

Selon un mode de réalisation complémentaire de l'invention, et afin de simplifier l'implémentation du procédé 200, toutes les deuxièmes trames sont considérées comme étant « prioritaires ». Le procédé 200 est simplifié car les étapes 204, 205, et 401 à 420 ne sont pas exécutées par le serveur central 110. Alternativement, le procédé 200 est simplifié en considérant toutes les deuxièmes trames comme étant « non prioritaires ». Le procédé 200 est alors simplifié car les étapes 204 et 301 à 320 ne sont pas exécutées par le serveur central 110.

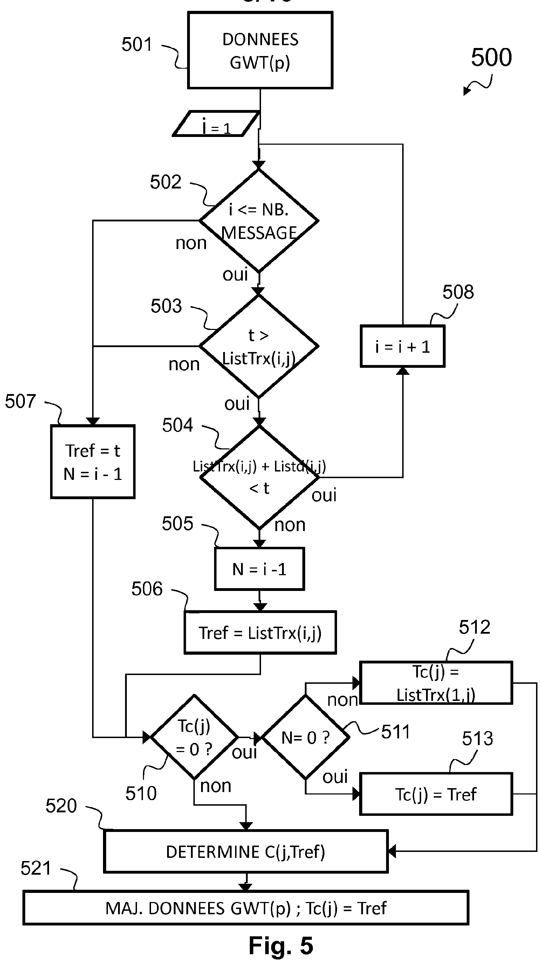

La **Fig. 5** illustre schématiquement un procédé 500 de mise à jour de données de planification d'émission de trames pour une passerelle parmi les passerelles 120, 12p,..., 12N comprises dans un réseau de communication 100 dit «réseau étendu à longue portée», selon un mode de réalisation de l'invention. Ce procédé est exécuté de façon périodique ou à la demande par le serveur central 110 afin de mettre à jour la valeur du rapport cyclique pour une passerelle et pour une sous-bande de fréquence « j ». Ce procédé prend comme argument le temps courant « t », la dernière valeur déterminée du rapport cyclique « C(j, Tc(j)) » avec :

- « C » fonction de rapport cyclique pour la passerelle donnée,
- « j » la sous-bande de fréquence, et,
- « Tc(j) » dernier temps de référence utilisé pour la passerelle donnée et pour la sous-bande de fréquence « j ».

De façon générale, la valeur du rapport cyclique à un instant donné « T + t » par rapport à la valeur du rapport cyclique à l'instant « T » s'exprime par :

$$ C(j, T + t) = \min \left( C0(j); C(j, T) + t - \left( 2 - DC(j) \right) . \sum_{k=1}^{N} Listd(k, j) \right), $$

avec :

- « C(j,t) » la valeur du rapport cyclique pour la sous-bande « j » à l'instant « t »,
- « min (a, b) » fonction sélectionnant la valeur minimale entre les arguments « a » et « b »,
- « C0(j) » un crédit maximum en rapport cyclique, exprimé pour une période de référence arbitraire d'une heure (3600 secondes). On a donc :

$$ \text{« } C0(j) = 3\ 600\ 000 * DC(j) \text{ »} ; $$

avec C0(j) exprimé en ms (millisecondes), « j » la sous-bande de fréquence et DC(j) le rapport cyclique à respecter pour la sous-bande « j », exprimé en pourcentage (« % »). Ainsi, pour DC(j) = 10 % (rapport cyclique de 10 % à respecter sur la sous-bande « j »), le crédit maximum de crédit en rapport cyclique « CO(j) » est égal à « 360 000 ms » (c'est-à-dire 6 minutes pour un temps de référence d'une heure).

« DC(j) » est le rapport cyclique (« *Duty Cycle* » en anglais) à respecter, c'est-à-dire le ratio entre la somme des temps d'émission de trames et le temps de non-émission de la passerelle pour les fréquences porteuses comprises dans la sous-bande « j » ; DC(j) est exprimé en pourcentage.

« Listd(k, j) » a été précédemment décrit et correspond à la durée d'émission, par la passerelle considérée, d'une trame « k » planifiée sur la sous-bande de fréquence « j »,

« N » correspond au nombre total de trames planifiées pour émission par la passerelle considérée sur la sous-bande « j » durant la plage de temps comprise entre « T » et « T+t ». Possiblement, ne sont prises en comptes que les trames dont le moment de début d'émission et le moment de fin d'émission sont compris dans la plage de temps comprise entre « T » et « T+t ».

L'étape 501 correspond au chargement des données correspondant à la passerelle dont on veut mettre à jour le rapport cyclique pour la sous-bande « j » dans la mémoire du serveur central 110. Ces données peuvent être enregistrées sur le serveur central 110 même. La valeur d'une variable « i » est initialisée à « 1 » avant de passer à l'étape 502.

Dans l'étape 502, le serveur central 110 détermine si « i » a dépassé le nombre d'élément compris dans la liste « ListTrx(j) » comprenant toutes les trames planifiées pour la passerelle considérée sur la sous-bande « j ». Si « i » est inférieur au nombre de trames planifiées, alors le serveur central 110 passe à l'étape 503. Sinon, il passe à l'étape 507.

Dans l'étape 503, le serveur central 110 détermine si le temps courant « t », correspondant au temps local du serveur central 110, possiblement synchronisé via NTP, est inférieur au temps de planification d'émission de la trame « i ». Si la trame est planifiée pour une émission ultérieure ou simultanée au temps courant « t », c'est-à-dire si « t <= ListTrx(i,j) » alors le serveur central 110 passe à l'étape 507. Si au contraire « t > ListTrx(i,j) », alors le serveur central 110 passe à l'étape 504.

L'étape 503 permet de déterminer si le temps courant « t » peut correspondre à un moment d'émission d'une trame « i ». L'étape 504 permet de s'assurer que le temps courant est postérieur à la fin d'émission de la trame « i ». Dit autrement, si « ListTrx(i,j) + Listd(i,j) < t », alors le temps courant « t » est postérieur à la fin d'émission de la trame « i », émise au temps « ListTrx(i,j) » et ayant une durée d'émission « Listd(i,j) ». Le serveur central 110 passe alors à l'étape 508 afin d'incrémenter la valeur de « i » de « 1 ». Puis, suite à l'étape 508, le serveur central 110, après avoir vérifié dans une nouvelle étape 502 que le nombre de trames n'a pas été dépassé, recommence l'étape 503 avec la trame suivante. Si au contraire « ListTrx(i,j) + Listd(i,j) >= t », sachant que le serveur central 110 a déterminé lors de l'étape 503 que « t > ListTrx(i,j) », cela signifie que le temps courant « t » correspond à un moment d'émission de la trame « i ». Dans ce cas, dans une étape suivante 505, le serveur central 110 mémorise « N = i - 1 ». Puis dans une étape 506, le serveur central 110 définit une variable « Tref », correspondant à un temps de référence pour le calcul du rapport cyclique, avec « Tref = t ». Dit autrement, dans l'étape 506, le serveur central 110 définit le temps de référence « Tref » comme étant égal au temps «ListTrx(i,j) » correspondant à l'émission de la trame « i ». La « N »-ème trame de la liste « ListTrx(j) » correspond à la dernière trame planifiée pour émission par la passerelle considérée avant le temps de référence « Tref ». Ainsi, il faudra considérer ces « N » trames pour le calcul du rapport cyclique.

Lors de l'étape 507, le temps de référence « Tref » est défini égal au temps courant « t ». Cela correspond à une situation où le temps courant ne correspond pas à un moment d'émission d'une trame « i ».

Suite aux étapes 506 et 507, le serveur central 110 passe à l'étape 510. Lors de l'étape 510, le serveur central 110 détermine la valeur de la variable « Tc(j) ». « Tc(j) » correspond au temps de référence « Tref » utilisé lors de la précédente itération du procédé de mise à jour 500 pour la passerelle considérée pour la sous-bande « j », comme décrit ci-après dans la description de l'étape 512. Lors de la première itération du procédé 500, la valeur de « Tc(j) » est initialisée à « zéro », valeur par défaut. Dans ce cas, si « Tc(j) = 0 », alors le serveur central 110 passe à l'étape 511 afin de déterminer si des trames sont planifiées pour émission avant le temps de référence. Dit autrement, si « N = 0 », alors, dans une étape 513, le serveur central 110 définit « Tc(j) = Tref ». Dit autrement, aucune trame n'étant planifiée pour émission avant le temps de référence « Tref », la valeur de « Tc(j) » peut être fixée à « Tref » sans modifier la valeur du rapport cyclique, puisque celui-ci est déjà à sa valeur maximale. Si au contraire « N » est différent de « zéro », cela signifie qu'il faut tenir compte des trames à émettre pour le calcul du rapport cyclique, et, dans une étape 512, le serveur central 110 définit « Tc(j) = ListTrx(1,j) » afin de démarrer le calcul du rapport cyclique à l'émission de la première trame.

Suite à l'étape 512 ou 513, ou bien, si dans l'étape 510 « Tc(j) » est différent de « zéro », le serveur central 110 passe à l'étape 520. L'étape 520 correspond à l'étape de calcul du rapport cyclique « C(j,Tref) » :

$$C(j, Tref) = \min\left(C0(j); C(j, Tc(j)) + Tref - Tc(j) - \left(2 - DC(j)\right).\sum_{k=1}^{N} Listd(j,k)\right)$$

Dans une étape suivante 512, le serveur central 110 met à jour les données de planification d'émission de trames pour la passerelle considérée pour la sous-bande de fréquence « j ».». Cette mise à jour comprend la suppression des « N» premiers éléments des listes « ListTrx(j) » et « Listd(j) » pour la sous-bande « j ». Le serveur central 110 mémorise le temps de référence et le rapport cyclique pour ce temps de référence pour une future itération, c'est-à-dire :

« Tc(j) » prend la valeur « Tref », et,

« C(j,Tc(j)) » prend la valeur « C(j,Tref) », pour une utilisation ultérieure de ces deux valeurs mises à jour de « Tc(j) » et de « C(j,Tc(j)) » dans une nouvelle itération du procédé 500 pour la passerelle considérée pour la sous-bande « j ».

La **Fig. 6** illustre schématiquement un procédé 600 de vérification qu'une trame à émettre peut être insérée dans la planification de trames à émettre d'une passerelle parmi les passerelles 120, 12p,..., 12N, selon un mode de réalisation de l'invention.

Le procédé 600 illustré dans la Fig. 6 correspond aux étapes 304 ou 404 du procédé 200 pour une passerelle « p » devant planifier l'émission d'une trame sur une fréquence comprise dans une sous-bande de fréquence « j ».».

Dans une étape 601, le serveur central 110 retrouve les données de planification d'émission de trames pour la passerelle considérée pour chaque sous-bande de fréquence, y compris la sous-bande de fréquence « j ». Ces données ont possiblement précédemment été retrouvées par le serveur central 110 lors de l'étape 302 ou 402. Lors de cette étape, une variable « k » est initialisée à la valeur « zéro ».

Dans une étape 602, le serveur central 110 détermine si la valeur de la variable « k » est inférieure au nombre de sous-bandes de fréquences utilisées par la passerelle « p » (« *NbSubBands* » pour la passerelle « p » dans la Fig. 6). Si « k » est supérieur à cette valeur, cela signifie que toutes les sous-bandes de fréquences ont été vérifiées sans qu'un chevauchement ait été détecté, le serveur central 110 passe alors à l'étape 615. Sinon, si « k » est inférieur au nombre de sous-bandes de fréquences utilisées par la passerelle « p », le serveur central 110 passe à l'étape 603.

Dans une étape 603, le serveur central 110 incrémente la valeur de la variable « k » de « 1 » et initialise, ou réinitialise, la valeur d'une variable « i » à « 1 ». Le serveur central 110 passe à une épreuve 604.

Lors de l'étape 604, le serveur central 110 vérifie que « i » est inférieur au nombre de trames planifiées pour émission sur la sous-bande de fréquence « k »,», c'est-à-dire au nombre d'éléments dans la liste ListTrx(k) pour la passerelle « p ».». Si oui, le serveur central 110 passe à l'étape 605, si non, à l'étape 607.

Dans l'étape 605, le serveur central 110 détermine si le temps d'émission de la deuxième trame « Trx » est inférieur au temps d'émission « ListTrx(i,k) » de la trame planifiée « i » pour la sous-bande de fréquence « k ». Si oui, le serveur central 110 passe à l'étape 606, si non, il passe à l'étape 609. Si « Trx » est inférieur au temps d'émission de la trame planifiée « i » pour la sous-bande de fréquence « k », cela signifie que la deuxième trame doit être émise avant la trame « i ». Il faut alors vérifier ensuite si le délai entre le temps « Trx » et le début de l'émission de la trame « i » pour la sous-bande de fréquence « k » est suffisant pour l'émission de la deuxième trame sachant que la durée d'émission de la deuxième trame est « d ».

Cette vérification est faite lors de l'étape 606. Ainsi, si « Trx + d » est supérieur à « ListTrx(i,k) », alors il n'y a pas un délai suffisant pour l'émission de la deuxième trame avant l'émission planifiée de la trame « i » pour la sous-bande de fréquence « k », et le serveur central 110 passe à l'étape 620. L'étape 620 correspond au fait que la passerelle considérée « p » n'est pas disponible pour l'émission de la deuxième trame. Le procédé 200 se poursuit alors par l'étape 306 dans le cas d'une deuxième trame prioritaire, et par l'étape 407 dans le cas d'une deuxième trame non prioritaire.

Suite à l'étape 606, si « Trx + d » est inférieur à « ListTrx(i,k) », cela signifie que le délai entre « Trx » et le début de l'émission de la trame « i » pour la sous-bande de fréquence « k » est suffisant pour l'émission de la deuxième trame de durée « d ». Le serveur central 110 passe alors à l'étape 607.

Lors de l'étape 607, le serveur central 110 détermine si la valeur de la variable « k » est égale à « j », « j » correspond à la sous-bande « j » comprenant la fréquence d'émission de la trame à planifier. Si c'est le cas, le serveur central 110 passe à l'étape 608, sinon directement à l'étape 602.

Lors de l'étape 608, le serveur central 110 110 mémorise pour une variable « N » la valeur « i - 1 », « N » correspondant à la dernière trame planifiée pour émission sur la sous-bande « j » avant la deuxième trame, ou, dit autrement, à la trame planifiée, sur la sous-bande « j », devant être émise juste avant la deuxième trame. Le serveur central 110 repasse ensuite à l'étape 602.

Lors de l'étape 609, le serveur central 110 détermine si le temps d'émission de la deuxième trame « Trx » correspond à un moment pendant lequel la passerelle est planifiée pour l'émission de la trame « i » pour la sous-bande de fréquence « k » de durée « Listd(i,k) ». Si « Trx » est inférieur à « ListTrx(i,k) + Listd(i,k) », sachant de l'étape 605 que « Trx » est supérieur à « ListTrx(i,k) », alors « Trx » correspond à un moment d'émission de la trame « i » pour la sous-bande de fréquence « k » et le serveur central 110 passe à l'étape 620. Sinon, le serveur central 110 passe à l'étape 610, correspondant à l'incrémentation de la variable « i », avec « i = i+1 », puis repasse à l'étape 604.

La **Fig. 7** illustre schématiquement un procédé 700 de vérification du respect d'un rapport cyclique pour la planification d'émission d'une trame par une passerelle, selon un mode de réalisation de l'invention.

Le procédé 700 illustré dans la Fig. 7 correspond aux étapes 305 ou 405 du procédé 200.

Dans une étape 701, le serveur central 110 retrouve les données de planification d'émission de trames pour la passerelle considérée et la sous-bande « j ». Ces données ont possiblement précédemment été retrouvées par le serveur central 110 lors de l'étape 302 ou 402.

Le serveur central 110 retrouve la valeur de la variable « Tc(j) » telle que définie lors de la description de la Fig. 5, étapes 510 et suivantes. « Tc(j) » correspond au denier temps de référence utilisé pour la passerelle donnée de valeur pour la dernière mise à jour de son rapport cyclique sur la sous-bande « j ». Le serveur central 110 retrouve aussi la valeur de « N » telle que déterminée lors des étapes 304 ou 404, comme décrit dans la Fig. 6, étape 608.

Dans une étape 702, si « Tc(j) = 0 » alors le serveur central 110 passe à l'étape 703, sinon il passe à l'étape 706. Dans l'étape 703, si « N = 0 », alors le serveur central 110 passe à l'étape 705, sinon il passe à l'étape 704.

Dans l'étape 704, le serveur central 110 définit la valeur du temps de référence « Tref » comme étant égale à « ListTrx(1,j) » puis le serveur central 110 passe à l'étape 707.

Dans l'étape 705, le serveur central 110 définit la valeur du temps de référence « Tref » comme étant égale à « Trx » puis le serveur central 110 passe à l'étape 707.

Lors de l'étape 706, le serveur central 110 définit le temps de référence « Tref » comme étant égal à « Tc(j) ». Puis le serveur central 110 passe à l'étape 707.

Les étapes 702 à 706 obéissent à la même logique que les étapes 510 à 513.

Dans l'étape 7107, le serveur central 110 détermine la valeur du rapport cyclique au temps d'émission de la deuxième trame « Trx », avec :

$$ C(j, Trx) = \min(C0(j); C(j, Tc(j)) + Trx - Tref - (2 - DC(j). \sum_{k=1}^{N} Listd(k,j)) $$

« C(j,Trx) » est la valeur du rapport cyclique au moment « Trx » pour la sous-bande « j ». Dit autrement, C(j,Trx) représente le crédit en rapport cyclique (« *Duty Cycle* ») disponible au moment « Trx » pour la passerelle donnée et pour la sous-bande « j ». Ce crédit représente un temps disponible pour l'émission de trames sur la sous-bande « j » par la passerelle concernée.

Si ce crédit C(j,Trx) est supérieur à « d », alors la passerelle concernée a suffisamment de crédit pour émettre la deuxième trame. Le procédé 200 se poursuit par l'étape 310 dans le cas d'une deuxième trame prioritaire, et par l'étape 406 dans le cas d'une deuxième trame non prioritaire. Dans le cas d'une trame non prioritaire, l'étape 708 est modifiée dans le sens où la comparaison du crédit en rapport cyclique est faite avec la variable « maxC » et non avec « d » afin, *in fine,* de sélectionner la passerelle disposant du plus grand crédit en rapport cyclique.

Dans le cas contraire, la passerelle ne dispose pas de crédit suffisant pour l'émission de la deuxième trame. Le procédé 200 se poursuit par l'étape 306 dans le cas d'une deuxième trame prioritaire, et par l'étape 407 dans le cas d'une deuxième trame non prioritaire. Dans le cas d'une trame non prioritaire, l'étape 708 est modifiée dans le sens où la comparaison du crédit en rapport cyclique est faite avec la variable « maxC » et non avec « d » afin, *infine,* de sélectionner la passerelle disposant du plus grand crédit en rapport cyclique.

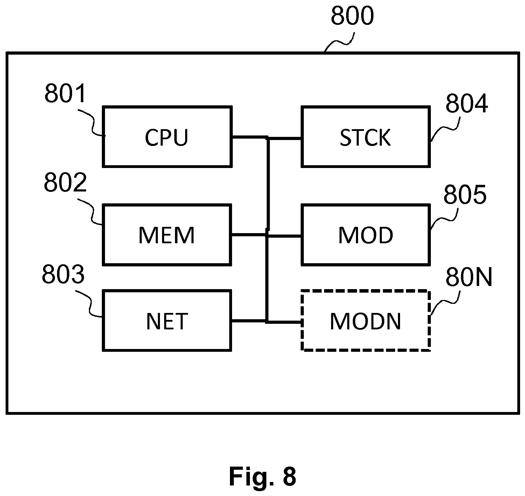

La **Fig. 8** illustre schématiquement l'architecture matérielle d'un serveur 800, par exemple le serveur central 110, adapté pour mettre en œuvre le procédé permettant de sélectionner une passerelle parmi une pluralité de passerelles pour l'émission d'une trame vers un dispositif électronique 101 d'un réseau de communication 100 dit « réseau étendu à longue portée », procédé décrit dans les Figs. 2, 3 et 4. Le serveur 800 comporte, reliés par un bus de communication : un processeur ou CPU (« *Central Processing Unit* » en anglais) 801 ; une mémoire MEM 802 de type RAM (« *Random Access Memory* » en anglais) et/ou ROM (« *Read Only Memory* » en anglais), un module réseau NET 803, un module de stockage STCK 804 de type stockage interne et possiblement d'autres modules 805 à 80N de différentes natures. Le module de stockage STCK 804 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 801 peut enregistrer des données sur le module de stockage STCK 804 ou lire des données enregistrées sur le module de stockage STCK 804. Ces données peuvent correspondre à des paramètres de configuration du serveur 800 ou à des informations reçues par exemple dans un message reçu par le module réseau NET 803, ou via un autre module de communication 80N. Le module réseau NET 803 permet la connexion du serveur 800 à un ou plusieurs réseaux de communication. Le module réseau 803 permet typiquement la connexion du serveur 800 à *Internet.* Le module réseau 803 permet au serveur 800 d'envoyer, respectivement de recevoir, des trames à destination de, respectivement en provenance de, un ou plusieurs objets connectés, par exemple l'objet connecté 101, les trames transitant via l'une des passerelles 120, 12p,..., 12N.

Le processeur CPU 801 est capable d'exécuter des instructions chargées dans la mémoire MEM 802, par exemple à partir du module de stockage STCK 804 ou d'un réseau de communication via le module réseau NET 803, ou d'un autre module de communication 80N par exemple. Lorsque le serveur 800 est mis sous tension, le processeur CPU 801 est capable de lire de la mémoire MEM 802 des instructions et de les exécuter. Ces instructions forment un programme d'ordinateur causant la mise en œuvre, par le processeur CPU 801, de tout ou partie des procédés et étapes décrits ci-avant. Ainsi, tout ou partie des procédés et étapes décrits ci-avant peut être implémenté sous forme logicielle par exécution d'un ensemble d'instructions par une machine programmable, telle qu'un DSP (« *Digital Signal Processor* » en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gâte Array* » en anglais) ou un ASIC (« *Application-Specific Integrated Circuit* » en anglais). Le serveur 800 est typiquement un serveur dit *« LNS »* (« *LoRa Network Server* » en anglais), c'est-à-dire un serveur utilisé dans un réseau de communication conforme à la norme *LoRa™*.

Le serveur 800 est adapté pour mettre en œuvre tout ou partie des étapes du procédé 200 décrit dans les Figs. 2, 3 et 4, ainsi que les procédés décrits dans les Figs. 5, 6 et 7, permettant de sélectionner une passerelle parmi une pluralité de passerelles pour l'émission d'une trame vers un dispositif électronique d'un réseau de communication dit « réseau étendu à longue portée » selon le premier mode de réalisation de l'invention. Le serveur 800 est aussi adapté à la mise en œuvre de tout ou partie des étapes du procédé permettant de sélectionner une passerelle parmi une pluralité de passerelles pour l'émission d'une trame vers un dispositif électronique d'un réseau de communication dit « réseau étendu à longue portée » selon le deuxième mode de réalisation de l'invention, procédé décrit ci-après et dans les Figs. 9 et 10.

Dans le deuxième mode de réalisation de l'invention, contrairement au premier mode de réalisation de l'invention, chaque passerelle 120, 12p,..., 12N est susceptible d'émettre plusieurs trames simultanément sur différentes fréquences, fréquences possiblement comprises dans différentes sous-bandes de fréquences. En outre, une nouvelle trame à planifier pour émission ne doit pas chevaucher une autre trame déjà planifiée pour émission sur une même fréquence. De même, le crédit en rapport cyclique doit être suffisant non seulement au début de l'émission d'une trame, comme dans le premier mode de réalisation, mais aussi durant tout le temps d'émission de la trame à planifier pour émission, c'est-à-dire pendant la durée « d ». Il est donc théoriquement nécessaire de calculer un crédit en rapport cyclique à chaque instant sur toute la durée « d » d'émission d'une trame à planifier pour émission ce qui demande un temps de traitement pour le serveur central 110 potentiellement très long. Ce temps de traitement peut être trop long pour être compatible avec une sélection d'une des passerelles 120, 12p,..., 12N dans un délai compatible avec le respect *in fine* du délai de réponse.

Afin de préserver un principe de traitements similaire au premier mode de réalisation de l'invention, un crédit en rapport cyclique est déterminé pour chaque fréquence « f » d'une sous-bande de fréquence « j », et ce pour chaque sous-bande de fréquence « j ». Dit autrement, il est décidé d'attribuer un rapport cyclique à respecter pour chaque fréquence d'une sous-bande de fréquence. Cette attribution d'un rapport cyclique pour chaque fréquence « f » d'une sous-bande de fréquence « j » est déterminée de manière à respecter le rapport cyclique de chaque sous-bande de fréquence « j ». Ainsi, « C(j, f, t) » correspondant au rapport cyclique pour la fréquence « f » de la sous-bande de fréquence « j » à l'instant « t », nous définissons :

$$C(j, f, 0) = C0(j, f) = p(j, f).3600000.DC(j) \; ;$$

« DC(j) » est le rapport cyclique (« *Duty Cycle* » en anglais) à respecter, c'est-à-dire le ratio entre la somme des temps d'émission de trames et le temps de non-émission de la passerelle pour les fréquences porteuses comprises dans la sous-bande « j » ; DC(j) est exprimé en pourcentage.

« C0(j, f) » est un crédit maximum en rapport cyclique, exprimé pour une période de référence arbitraire d'une heure (3600 secondes) pour la fréquence « f » de la sous-bande de fréquence « j ». Les paramètres « p(j, f) » définissent une pondération, telle que :

$$\sum_{f \in sous-bande(j)} p(j,f) = 1$$

Avec la valeur de p(j, f) comprise entre « 0 » et « 1 ».
Nous avons ainsi :

$$\sum_{f \in sous-bande(j)} C0(j,f) = C0(j)$$

Par exemple, « p(j, f) = 1/NbFreq », avec « NbFreq » égal au nombre de fréquences « f » comprises dans la sous-bande de fréquence « j ».

A chaque fois qu'une des passerelles 120, 12p,..., 12N émet une trame sur une fréquence « f » d'une sous-bande de fréquence « j », son crédit en rapport cyclique est égal à :

$$C(j, f, Tfin) = C(j, f, Td\acute{e}but) - \left(1 - DC(j)\right).d \; ;$$

avec :

« Tdébut » le temps de début d'émission de la trame,
« Tfin » le temps de fin d'émission de la trame,
« d » la durée d'émission de la trame,
« DC(j) » est le rapport cyclique à respecter pour la sous-bande de fréquence « j ».

Le procédé permettant la sélection, par un serveur central 110 d'un réseau de communication 100 dit « réseau étendu à longue portée », d'une passerelle parmi une pluralité de passerelles 120, 12p,..., 12N pour émettre une trame vers un dispositif électronique 101 en réponse à une trame émise par ce dispositif électronique 101, selon le deuxième mode de réalisation de l'invention est similaire au procédé de sélection décrit dans les Figs. 2, 3 et 4 et correspondant au premier mode de réalisation, à ceci près que les étapes 304, 305 et 310, respectivement 404, 405 et 406, sont différentes :

- pour les étapes 304 et 404, une vérification d'un éventuel chevauchement de trame plus simple car limité à un chevauchement avec une trame déjà planifiée sur la seule fréquence d'émission,
- pour les étapes 305, 310, 405 et 406, l'utilisation d'un crédit en rapport cyclique par fréquence « f » en complément du crédit en rapport cyclique pour une sous-bande de fréquence « j ».

La valeur du rapport cyclique (ou crédit) sur la fréquence « f » de la sous-bande de fréquence « j » d'une des passerelles 120, 12p,..., 12N à un instant « T + t » par rapport à la valeur du rapport cyclique à l'instant « T » s'exprime par :

$$C(j, f, T + t) = \min(C0(j, f); C(j, f, T) + t - \left(2 - DC(j)\right).\textstyle\sum_{k=1}^{N} Listd(j, f, k)),$$

avec :

« C(j, f, t) » la valeur du rapport cyclique pour la fréquence « f » de la sous-bande « j » à l'instant « t »,
« min (a, b) » fonction sélectionnant la valeur minimale entre les arguments « a » et « b »,
« C0(j, f) » une valeur maximale du rapport cyclique pour la fréquence « f » de la sous-bande « j », exprimée pour une période de référence arbitraire d'une heure (3600 secondes), comme décrit précédemment,
« DC(j) » est le rapport cyclique (« *Duty Cycle* » en anglais) à respecter pour la sous-bande de fréquence « j », c'est-à-dire le ratio entre la somme des temps d'émission de trames et le temps de non-émission de la passerelle pour les fréquences porteuses comprises dans la sous-bande « j » ; DC(j) est exprimé en pourcentage.
« Listd(j, f, k) », de façon similaire à « Listd(j, k) » précédemment décrit, correspond à la durée d'émission, par la passerelle considérée, d'une trame « k » planifiée sur la fréquence « f » de la sous-bande « j »,
« N » correspond au nombre total de trames planifiées pour émission par la passerelle considérée sur la sous-bande « j » jusqu'à l'instant « T + t ».

La **Fig. 9** illustre schématiquement un procédé 900 de mise à jour de données de planification d'émission de trames pour une passerelle 120, 12p,..., 12N comprise dans un réseau de communication dit « réseau étendu à longue portée », selon un deuxième mode de réalisation de l'invention.

Le procédé 900 est globalement similaire au procédé 500 décrit dans la Fig. 5, à l'exception notable que :

- « ListTrx(i, j,f) » remplace la variable « ListTrx(i, j) » utilisée dans la Fig. 5,
- « Listd(j, f, k) » remplace la variable « Listd(i, j) » utilisée dans la Fig. 5,
- le calcul de C(j, f, Tref) remplace le calcul de C(j, Tref) utilisé dans la Fig. 5,
- « Tc(j, f) » remplace « Tc(j) » utilisé dans la Fig. 5.

Ainsi, « ListTrx(i, j, f) » correspond au temps d'émission de la « i »-ème trame à émettre sur la fréquence « f » de la sous-bande de fréquence « j » par ladite passerelle et « Listd(i, j, f) » à la durée de ladite « i »-ème trame pour la fréquence « f » de la sous-bande de fréquences « j ».

L'étape 901 correspond au chargement des données correspondant à la passerelle dont on veut mettre à jour le rapport cyclique pour la fréquence « f » de la sous-bande « j » dans la mémoire du serveur central 110. Ces données peuvent être enregistrées sur le serveur central 110 même. La valeur d'une variable « i » est initialisée à « 1 » avant de passer à l'étape 902.

Dans l'étape 902, le serveur central 110 détermine si « i » a dépassé le nombre d'élément compris dans la liste « ListTrx(j, f) » comprenant toutes les trames planifiées pour la passerelle considérée sur la fréquence « f » de la sous-bande « j ». Si « i » est inférieur au nombre de trames planifiées pour émission sur la fréquence « f » de la sous-bande de fréquence « j », alors le serveur central 110 passe à l'étape 903. Sinon, il passe à l'étape 907.

Dans l'étape 903, le serveur central 110 détermine si le temps courant « t », correspondant au temps local du serveur central 110, possiblement synchronisé via NTP, est inférieur au temps de planification d'émission de la trame « i » sur la fréquence « f » de la sous-bande de fréquence « j ». Si la trame est planifiée pour une émission ultérieure ou simultanée au temps courant « t », c'est-à-dire si « t <= ListTrx(i,j,f) » alors le serveur central 110 passe à l'étape à l'étape 907. Si au contraire « t > ListTrx(i,j,f) », alors le serveur central 110 passe à l'étape 904.

L'étape 903 permet de déterminer si le temps courant « t » peut correspondre à un moment d'émission d'une trame « i ». L'étape 904 permet de s'assurer que le temps courant est postérieur à la fin d'émission de la trame « i ». Dit autrement, si « ListTrx(i,j,f) + Listd(i,j,f) < t », alors le temps courant « t » est postérieur à la fin d'émission de la trame « i », émise au temps « ListTrx(i,j,f) » et ayant une durée d'émission « Listd(i,j,f) ». Le serveur central 110 passe alors à l'étape 908 afin d'incrémenter la valeur de « i » de « 1 ». Puis, suite à l'étape 908, le serveur central 110, après avoir vérifié dans une nouvelle étape 902 que le nombre de trames n'a pas été dépassé, recommence l'étape 903 avec la trame suivante. Si au contraire « ListTrx(i,j,f) + Listd(i,j,f) >= t », sachant que le serveur central 110 a déterminé lors de l'étape 903 que « t > ListTrx(i,j,f) », cela signifie que le temps courant « t » correspond à un moment d'émission de la trame « i ». Dans ce cas, dans une étape suivante 905, le serveur central 110 mémorise « N = i - 1 ». Puis dans une étape 906, le serveur central 110 définit une variable « Tref », correspondant à un temps de référence pour le calcul du rapport cyclique, avec « Tref = t ». Dit autrement, dans l'étape 906, le serveur central 110 définit le temps de référence « Tref » comme étant égal au temps « ListTrx(i,j,f) » correspondant à l'émission de la trame « i » sur la fréquence « f » de la sous-bande de fréquence « j ». La « N »-ème trame de la liste « ListTrx(j,f) » correspond à la dernière trame planifiée pour émission par la passerelle considérée avant le temps de référence « Tref ». Ainsi, il faudra considérer ces « N » trames pour le calcul du rapport cyclique sur la fréquence « f » de la sous-bande de fréquence « j ».

Lors de l'étape 907, le temps de référence « Tref » est défini égal au temps courant « t ». Cela correspond à une situation où le temps courant ne correspond pas à un moment d'émission d'une trame « i ».

Suite aux étapes 906 et 907, le serveur central 110 passe à l'étape 910. Lors de l'étape 910, le serveur central 110 détermine la valeur de la variable « Tc(j,f) », « Tc(j,f) » correspond au dernier temps de référence utilisé lors de la précédente itération du procédé de mise à jour 900 pour la passerelle considérée pour la fréquence « f » de la sous-bande de fréquence « j ». Lors de la première itération du procédé 900, la valeur de « Tc(j,f) » est définie égale à « zéro », valeur par défaut. Si « Tc(j,f) = 0 », alors le serveur central 110 passe à l'étape 911 afin de déterminer si des trames sont planifiées pour émission avant le temps de référence « Tref ». Dit autrement, si « N = 0 », alors, dans une étape 913, le serveur central 110 définit « Tc(j,f) = Tref ». Dit autrement, aucune trame n'étant planifiée pour émission avant le temps de référence « Tref », la valeur de « Tc(j,f) » peut être fixée à « Tref » sans modifier la valeur du rapport cyclique, puisque celui-ci est déjà à sa valeur maximale. Si au contraire « N » est différent de « zéro », cela signifie qu'il faut tenir compte des trames à émettre pour le calcul du rapport cyclique, et, dans une étape 912, le serveur central 110 définit « Tc(j,f) = ListTrx(1,j,f) » afin de démarrer le calcul du rapport cyclique à l'émission de la première trame.

Suite à l'étape 912 ou 913, ou bien, si dans l'étape 910 « Tc(j,f) » est différent de « zéro », le serveur central 110 passe à l'étape 920. L'étape 920 correspond à l'étape de calcul du rapport cyclique « C(j,f,Tref) » :

$$C(j,f,Tref) = \min\left(C0(j,f); C(j,f,Tc(j,f) + Tref - Tc(j,f) - (2 - DC(j)).\sum_{k=1}^{N} Listd(j,k,f)\right)$$

Dans une étape suivante 912, le serveur central 110 met à jour les données de planification d'émission de trames pour la passerelle considérée pour la fréquence « f » de la sous-bande de fréquence « j ». Cette mise à jour comprend la suppression des « N » premiers éléments des listes « ListTrx(j,f) » et « Listd(j,f) » pour la fréquence « f » de la sous-bande de fréquence « j ». Le serveur central 110 mémorise le temps de référence « Tref » et le rapport cyclique pour ce temps de référence pour une future itération, c'est-à-dire :

« Tc(j,f) » prend la valeur « Tref », et,
« C(j,f,Tc(j)) » prend la valeur « C(j,f,Tref) », pour utilisation ultérieure de ces deux valeurs mises à jour de « Tc(j,f) » et de « C(j,f,Tc(j)) » dans une nouvelle itération du procédé 900 pour la passerelle considérée pour la fréquence « f » de la sous-bande de fréquence « j ».

La **FIG. 10** illustre schématiquement un procédé 1000 de vérification qu'une trame à émettre peut être insérée dans la planification de trames à émettre d'une passerelle 120, 12p,..., 12N, selon le deuxième mode de réalisation de l'invention.

Le procédé 1000 est globalement similaire au procédé 600 décrit dans la Fig. 6, à l'exception notable que :

- « ListTrx(i, j,f) » remplace la variable « ListTrx(i, j) » utilisée dans la Fig. 6,
- « Listd(j, f, k) » remplace la variable « Listd(i, j) » utilisée dans la Fig. 6,
- le calcul de C(j, f, Tref) remplace le calcul de C(j, Tref) utilisé dans la Fig. 6,
- « Tc(j, f) » remplace « Tc(j) » utilisé dans la Fig. 6.

Une autre différence notable avec le procédé 600 est qu'il n'est pas utile dans le cas du procédé 1000 de vérifier un éventuel chevauchement d'une trame à planifier pour émission sur une fréquence avec une autre trame déjà planifiée pour émission sur une autre fréquence différente. Seules les trames planifiées pour émission sur la fréquence d'émission doivent être considérées. En effet, selon ce deuxième mode de réalisation, une passerelle 120, 12p,..., 12N peut émettre possiblement plusieurs trames simultanément sur différentes fréquences.

Ainsi, la variable « k » utilisée dans le procédé 600 décrit dans la Fig. 6 n'est pas utilisée dans le procédé 1000 présentement décrit. Les étapes 602 et 607 du procédé 600 n'ont pas d'équivalent dans le procédé 1000.

Le procédé 1000 illustré dans la Fig. 10 correspond aux équivalents des étapes 304 ou 404 du procédé pour une passerelle « p » devant planifier l'émission d'une trame sur une fréquence « f » comprise dans une sous-bande de fréquence « j » selon le deuxième mode de réalisation de l'invention.

Dans une étape 1001, le serveur central 110 retrouve les données de planification d'émission de trames pour la passerelle considérée pour la fréquence « f » de la sous-bande de fréquence « j ». Ces données ont possiblement précédemment été retrouvées par le serveur central 110.

Dans une étape 1003, le serveur central 110 initialise, ou réinitialise, la valeur d'une variable « i » à « 1 ». Le serveur central 110 passe à une épreuve 1004.

Lors de l'étape 1004, le serveur central 110 vérifie que « i » est inférieur au nombre de trames planifiées pour émission sur la fréquence « f » de la sous-bande de fréquence « j », c'est-à-dire au nombre d'éléments dans la liste ListTrx(j,f) pour la passerelle « p ». Si oui, le serveur central 110 passe à l'étape 1005, si non, à l'étape 1008.

Dans l'étape 1005, le serveur central 110 détermine si le temps d'émission de la deuxième trame « Trx » est inférieur au temps d'émission « ListTrx(i,j,f) » de la trame planifiée « i » pour la fréquence « f » de la sous-bande de fréquence « j ». Si oui, le serveur central 110 passe à l'étape 1006, si non, il passe à l'étape 1009. Si « Trx » est inférieur au temps d'émission de la trame planifiée « i » pour la fréquence « f » de la sous-bande de fréquence « j », cela signifie que la deuxième trame doit être émise avant la trame « i ». Il faut alors vérifier ensuite si le délai entre le temps « Trx » et le début de l'émission de la trame « i » pour la fréquence « f » de la sous-bande de fréquence « j » est suffisant pour l'émission de la deuxième trame sachant que la durée d'émission de la deuxième trame est « d ».

Cette vérification est faite lors de l'étape 1006. Ainsi, si « Trx + d » est supérieur à « ListTrx(i,j,f) », alors il n'y a pas un délai suffisant pour l'émission de la deuxième trame avant l'émission planifiée de la trame « i » pour la fréquence « f » de la sous-bande de fréquence « j », et le serveur central 110 passe à l'étape 1020. L'étape 1020 correspond au fait que la passerelle considérée « p » n'est pas disponible pour l'émission de la deuxième trame. Le procédé de sélection d'une passerelle selon le deuxième mode de réalisation se poursuit alors par l'équivalent d'une étape 306 dans le cas d'une deuxième trame prioritaire, et par l'équivalent d'une étape 407 dans le cas d'une deuxième trame non prioritaire.

Suite à l'étape 1006, si « Trx + d » est inférieur à « ListTrx(i,j,f) », cela signifie que le délai entre « Trx » et le début de l'émission de la trame « i » pour la fréquence « f » de la sous-bande de fréquence « j » est suffisant pour l'émission de la deuxième trame de durée « d ». Le serveur central 110 passe alors à l'étape 1008.

Lors de l'étape 1008, le serveur central 110 mémorise pour une variable « N » la valeur « i - 1 », « N » correspondant à la dernière trame planifiée pour émission sur la fréquence « f » de la sous-bande de fréquence « j » avant la deuxième trame, ou, dit autrement, à la trame planifiée, sur la fréquence « f » de la sous-bande de fréquence « j », devant être émise juste avant la deuxième trame. Le serveur central 110 passepasse ensuite à l'étape 1015.

Lors de l'étape 1009, le serveur central 110 détermine si le temps d'émission de la deuxième trame « Trx » correspond à un moment pendant lequel la passerelle est planifiée pour l'émission de la trame « i » pour la fréquence « f » de la sous-bande de fréquence « jj » de durée « Listd(i,j,f) ». Si « Trx » est inférieur à « ListTrx(i,j,f) + Listd(i,j,f) », sachant de l'étape 1005 que « Trx » est supérieur à « ListTrx(i,j,f) », alors « Trx » correspond à un moment d'émission de la trame « i » pour la fréquence « f » de la sous-bande de fréquence « j » et le serveur central 110 passe à l'étape 1020. Sinon, le serveur central 110 passe à l'étape 1010, correspondant à l'incrémentation de la variable « i », avec « i = i+1 », puis repasse à l'étape 1004.

**Revendications**

1. Procédé (200) pour un système de communication (100) comprenant un dispositif électronique (101) et une pluralité de passerelles (120, 12p,..., 12N), le dispositif électronique et chaque passerelle étant adaptés pour émettre et recevoir des trames sur une bande de fréquence radio, chaque passerelle étant connectée à un même serveur central (110), une première trame étant émise par le dispositif électronique à destination du serveur central, la trame comprenant un identifiant du dispositif électronique, chaque passerelle recevant ladite trame et transmettant la trame reçue, en association avec un identifiant de la passerelle, vers le serveur central, un délai de réponse étant prédéfini pour répondre à la première trame, le procédé permettant la sélection par le serveur central d'une passerelle parmi la pluralité de passerelles pour émettre une deuxième trame vers le dispositif électronique en réponse à la première trame, le procédé étant exécuté par le serveur central et étant **caractérisé en ce qu'**il comprend les étapes de :

   - recevoir la première trame en provenance d'une première passerelle,
   - déterminer un moment d'émission et une durée de la deuxième trame devant être émise en réponse,
   - créer une liste en association avec l'identifiant du dispositif électronique, la liste comprenant l'identifiant de la première passerelle,
   - déclencher un délai d'attente pendant lequel, si le serveur central reçoit une autre trame émise par le dispositif électronique en provenance d'une autre passerelle, alors :

      - ajouter l'identifiant de l'autre passerelle ayant transmis la trame dans la liste,

      - à l'expiration du délai d'attente, choisir au moins une passerelle dont l'identifiant est compris dans la liste, et, pour cette passerelle :

         - retrouver des données de planification d'émission de trame par ladite passerelle, et,
         - vérifier si des critères de sélection, fonctions du moment d'émission et de la durée de la deuxième trame ainsi que des données de planification d'émission de trames de la passerelle, sont remplis,

   si les critères de sélection sont remplis, alors sélectionner ladite passerelle pour l'envoi de la deuxième trame en réponse à la première trame vers le dispositif électronique.

2. Procédé selon la revendication 1, chaque passerelle transmettant une trame reçue en association avec un identifiant de la passerelle et une indication sur la puissance de réception de la trame, le procédé étant **caractérisé en ce que** :

   - lors de l'étape d'ajouter d'un identifiant d'une passerelle dans la liste, l'indication sur la puissance de réception est ajoutée en association avec l'identifiant de la passerelle, et,
   - lors de l'étape de choisir une passerelle dans la liste, le choix est fonction de la puissance de réception associée à chaque identifiant.

3. Procédé selon la revendication 2, le procédé étant **caractérisé en ce que**, si, pendant le délai d'attente, le serveur central reçoit une trame dont la puissance de réception est inférieure à une valeur prédéterminée, alors ladite trame est ignorée pour la suite du procédé.

4. Procédé selon la revendication 2 ou 3, les données de planification d'émission de trame pour chaque passerelle comprenant un paramètre, dit rapport cyclique, ledit paramètre étant un ratio maximal d'un temps passé par ladite passerelle à émettre des trames sur une période donnée, chaque passerelle de la liste étant successivement choisie pour vérifier les critères de sélection, le procédé étant **caractérisé en ce que** sélectionner la passerelle comprend une étape de détermination de la valeur du rapport cyclique au moment de l'émission de la deuxième trame pour une passerelle et **en ce que** la sélection est fonction de la valeur du rapport cyclique déterminée.

5. Serveur central (110) pour un système de communication (100) comprenant un dispositif électronique (101) et une pluralité de passerelles (120, 12p,...,12N), le dispositif électronique et chaque passerelle étant adaptés pour émettre et recevoir des trames sur une bande de fréquence radio, chaque passerelle étant connectée au serveur central, une première trame étant émise par le dispositif électronique à destination du serveur central, la trame comprenant un identifiant du dispositif électronique, chaque passerelle recevant ladite trame et transmettant la trame reçue, en association avec un identifiant de la passerelle, vers le serveur central, un délai de réponse étant prédéfini pour répondre à la première trame, le serveur central étant **caractérisé en ce qu'**il est adapté, afin de sélectionner une passerelle parmi la pluralité de passerelles pour émettre une deuxième trame vers le dispositif électronique en réponse à la première trame, pour :

- recevoir la première trame en provenance d'une première passerelle,
- déterminer un moment d'émission et une durée de la deuxième trame devant être émise en réponse,
- créer une liste en association avec l'identifiant du dispositif électronique, la liste comprenant l'identifiant de la première passerelle,
- déclencher un délai d'attente pendant lequel, si le serveur central reçoit une autre trame émise par le dispositif électronique en provenance d'une autre passerelle, alors :

- ajouter l'identifiant de l'autre passerelle ayant transmis la trame dans la liste,

- à l'expiration du délai d'attente, choisir au moins une passerelle dont l'identifiant est compris dans la liste, et, pour cette passerelle :

- retrouver des données de planification d'émission de trame par ladite passerelle, et,
- vérifier si des critères de sélection, fonctions du moment d'émission et de la durée de la deuxième trame ainsi que des données de planification d'émission de trames de la passerelle, sont remplis,

si les critères de sélection sont remplis, alors sélectionner ladite passerelle pour l'envoi de la deuxième trame en réponse à la première trame vers le dispositif électronique.

6. Système de communication (100) comprenant un dispositif électronique (101) et une pluralité de passerelles (120, 12p,...,12N), le dispositif électronique et chaque passerelle étant adaptés pour émettre et recevoir des trames sur une bande de fréquence radio, chaque passerelle étant connectée à un même serveur central (110), une première trame étant émise par le dispositif électronique à destination du serveur central, la trame comprenant un identifiant du dispositif électronique, chaque passerelle recevant ladite trame et transmettant la trame reçue, en association avec un identifiant de la passerelle, vers le serveur central, un délai de réponse étant prédéfini pour répondre à la première trame, le serveur central étant **caractérisé en ce qu'**il est adapté, afin de sélectionner une passerelle parmi la pluralité de passerelles pour émettre une deuxième trame vers le dispositif électronique en réponse à la première trame, pour :

- recevoir la première trame en provenance d'une première passerelle,
- déterminer un moment d'émission et une durée de la deuxième trame devant être émise en réponse,
- créer une liste en association avec l'identifiant du dispositif électronique, la liste comprenant l'identifiant de la première passerelle,
- déclencher un délai d'attente pendant lequel, si le serveur central reçoit une autre trame émise par le dispositif électronique en provenance d'une autre passerelle, alors :

- ajouter l'identifiant de l'autre passerelle ayant transmis la trame dans la liste,

- à l'expiration du délai d'attente, choisir au moins une passerelle dont l'identifiant est compris dans la liste, et, pour cette passerelle :

- retrouver des données de planification d'émission de trame par ladite passerelle, et,
- vérifier si des critères de sélection, fonctions du moment d'émission et de la durée de la deuxième trame ainsi que des données de planification d'émission de trames de la passerelle, sont remplis,

si les critères de sélection sont remplis, alors sélectionner ladite passerelle pour l'envoi de la deuxième trame en réponse à la première trame vers le dispositif électronique.

7. Programme d'ordinateur, **caractérisé en ce qu'**il comprend des instructions pour mettre en œuvre, par un processeur (801), le procédé permettant la sélection d'une passerelle parmi une pluralité de passerelles pour l'émission d'une trame et étant exécuté par un serveur comprenant le processeur, selon l'une quelconque des revendications 1 à 4, lorsque le programme d'ordinateur est exécuté par le processeur.

8. Support d'enregistrement sur lequel est stocké le programme selon la revendication précédente.

**Patentansprüche**

1. Verfahren (200) für ein Kommunikationssystem (100), das eine elektronische Vorrichtung (101) und eine Vielzahl von Gateways (120, 12p, ..., 12N) enthält, wobei die elektronische Vorrichtung und jedes Gateway geeignet sind, Frames auf einem Funkfrequenzband zu senden und zu empfangen, wobei jedes Gateway mit dem gleichen zentralen Server (110) verbunden ist, wobei ein erster Frame von der elektronischen Vorrichtung an den zentralen Server gesendet wird, wobei der Frame eine Kennung der elektronischen Vorrichtung enthält, wobei jedes Gateway den Frame empfängt und den empfangenen Frame gemeinsam mit einer Kennung des Gateways an den zentralen Server sendet, wobei eine Beantwortungsfrist vordefiniert ist, um auf den ersten Frame zu antworten, wobei das Verfahren die Auswahl eines Gateways aus der Vielzahl von Gateways durch den zentralen Server erlaubt, um als Antwort auf den ersten Frame einen zweiten Frame an die elektronische Vorrichtung zu senden, wobei das Verfahren vom zentralen Server ausgeführt wird und **dadurch gekennzeichnet ist, dass** es die folgenden Schritte enthält:

   - Empfang des ersten Frames von einem ersten Gateway,
   - Bestimmen eines Sendezeitpunkts und einer Dauer des zweiten Frames, der als Antwort gesendet werden soll,
   - Erzeugen einer Liste gemeinsam mit der Kennung der elektronischen Vorrichtung, wobei die Liste die Kennung des ersten Gateways enthält,
   - Auslösen einer Wartezeit, während der, falls der zentrale Server einen anderen von der elektronischen Vorrichtung gesendeten Frame empfängt, der von einem anderen Gateway kommt, dann:

      - die Kennung des anderen Gateways, das den Frame übertragen hat, zur Liste hinzugefügt wird,

      - bei Ablauf der Wartezeit, Wählen mindestens eines Gateways, dessen Kennung in der Liste enthalten ist, und für dieses Gateway:

         - Finden von Planungsdaten des Sendens von Frames durch das Gateway, und
         - Überprüfen, ob Auswahlkriterien, die vom Sendezeitpunkt und von der Dauer des zweiten Frames sowie von den Planungsdaten des Sendens von Frames des Gateways abhängen, erfüllt sind,

   wenn die Auswahlkriterien erfüllt sind, Auswahl des Gateways zum Senden des zweiten Frames als Antwort auf den ersten Frame an die elektronische Vorrichtung.

2. Verfahren nach Anspruch 1, wobei jedes Gateway einen empfangenen Frame gemeinsam mit einer Kennung des Gateways und einer Angabe über die Empfangsleistung des Frames überträgt, wobei das Verfahren **dadurch gekennzeichnet ist, dass**:

   - im Schritt der Hinzufügung einer Kennung eines Gateways zur Liste die Angabe über die Empfangsleistung gemeinsam mit der Kennung des Gateways hinzugefügt wird, und
   - im Schritt der Wahl eines Gateways in der Liste die Wahl von der jeder Kennung zugeordneten Empfangsleistung abhängt.

3. Verfahren nach Anspruch 2, wobei das Verfahren **dadurch gekennzeichnet ist, dass**, wenn der zentrale Server während der Wartezeit einen Frame empfängt, dessen Empfangsleistung niedriger als ein vorbestimmter Wert ist, der Frame für den Rest des Verfahrens ignoriert wird.

4. Verfahren nach Anspruch 2 oder 3, wobei die Planungsdaten des Sendens von Frames für jedes Gateway einen Taktverhältnis genannten Parameter enthalten, wobei der Parameter ein maximales Verhältnis einer vom Gateway verbrachten Zeit ist, um Frames in einem gegebenen Zeitraum zu senden, wobei jedes Gateway der Liste nacheinander gewählt wird, um die Auswahlkriterien zu überprüfen, wobei das Verfahren **dadurch gekennzeichnet ist, dass** die Auswahl des Gateways einen Schritt der Bestimmung des Werts des Taktverhältnisses zum Zeitpunkt des Sendens des zweiten Frames für ein Gateway enthält, und dass die Auswahl vom Wert des bestimmten Taktverhältnisses abhängt.

5. Zentraler Server (110) für ein Kommunikationssystem (100), das eine elektronische Vorrichtung (101) und eine Vielzahl von Gateways (120, 12p, ..., 12N) enthält, wobei die elektronische Vorrichtung und jedes Gateway geeignet sind, Frames auf einem Funkfrequenzband zu senden und zu empfangen, wobei jedes Gateway mit dem zentralen Server verbunden ist, wobei ein erster Frame von der elektronischen Vorrichtung an den zentralen Server gesendet wird, wobei der Frame eine Kennung der elektronischen Vorrichtung enthält, wobei jedes Gateway den Frame empfängt und den empfangenen Frame gemeinsam mit einer Kennung des Gateways an den zentralen Server überträgt, wobei eine Beantwortungsfrist vordefiniert ist, um auf den ersten Frame zu antworten, wobei der zentrale Server **dadurch gekennzeichnet ist, dass** er zur Auswahl eines Gateways unter der Vielzahl von Gateways zum Senden eines zweiten Frames an die elektronische Vorrichtung als Antwort auf den ersten Frame geeignet ist:

- den ersten Frame von einem ersten Gateway zu empfangen,
- einen Sendezeitpunkt und eine Dauer des zweiten Frames zu bestimmen, der als Antwort gesendet werden soll,
- eine Liste gemeinsam mit der Kennung der elektronischen Vorrichtung zu erzeugen, wobei die Liste die Kennung des ersten Gateways enthält,
- eine Wartezeit auszulösen, während der, falls der zentrale Server einen anderen von der elektronischen Vorrichtung gesendeten Frame empfängt, der von einem anderen Gateway kommt:

- die Kennung des anderen Gateways, das den Frame übertragen hat, zur Liste hinzugefügt wird,

- bei Ablauf der Wartezeit mindestens ein Gateway zu wählen, dessen Kennung in der Liste enthalten ist, und für dieses Gateway:

- Planungsdaten des Sendens von Frames durch das Gateway zu finden, und
- zu überprüfen, ob Auswahlkriterien, die vom Sendezeitpunkt und von der Dauer des zweiten Frames sowie von den Planungsdaten des Sendens von Frames des Gateways abhängen, erfüllt sind,

wenn die Auswahlkriterien erfüllt sind, das Gateway zum Senden des zweiten Frames als Antwort auf den ersten Frame an die elektronische Vorrichtung auszuwählen.

6. Kommunikationssystem (100), das eine elektronische Vorrichtung (101) und eine Vielzahl von Gateways (120, 12p, ..., 12N) enthält, wobei die elektronische Vorrichtung und jedes Gateway geeignet sind, Frames auf einem Funkfrequenzband zu senden und zu empfangen, wobei jedes Gateway mit dem gleichen zentralen Server (110) verbunden ist, wobei ein erster Frame von der elektronischen Vorrichtung an den zentralen Server gesendet wird, wobei der Frame eine Kennung der elektronischen Vorrichtung enthält, wobei jedes Gateway den Frame empfängt und den empfangenen Frame gemeinsam mit einer Kennung des Gateways an den zentralen Server überträgt, wobei eine Beantwortungsfrist vordefiniert ist, um auf den ersten Frame zu antworten, wobei der zentrale Server **dadurch gekennzeichnet ist, dass** er zur Auswahl eines Gateways unter der Vielzahl von Gateways zum Senden eines zweiten Frames als Antwort auf den ersten Frame an die elektronische Vorrichtung geeignet ist:

- den ersten Frame von einem ersten Gateway zu empfangen,
- einen Sendezeitpunkt und eine Dauer des zweiten Frames zu bestimmen, der als Antwort gesendet werden soll,
- eine Liste gemeinsam mit der Kennung der elektronischen Vorrichtung zu erzeugen, wobei die Liste die Kennung des ersten Gateways enthält,
- eine Wartezeit auszulösen, während der, falls der zentrale Server einen anderen von der elektronischen Vorrichtung gesendeten Frame von einem anderen Gateway empfängt, dann:

- die Kennung des anderen Gateways, das den Frame übertragen hat, zur Liste hinzugefügt wird,

- bei Ablauf der Wartezeit mindestens ein Gateway zu wählen, dessen Kennung in der Liste enthalten ist, und für dieses Gateway:

- Planungsdaten des Sendens von Frames durch das Gateway zu finden, und
- zu überprüfen, ob Auswahlkriterien, die vom Sendezeitpunkt und von der Dauer des zweiten Frames sowie von den Planungsdaten des Sendens von Frames des Gateways abhängen, erfüllt sind,

wenn die Auswahlkriterien erfüllt sind, das Gateway zum Senden des zweiten Frames als Antwort auf den ersten Frame an die elektronische Vorrichtung auszuwählen.

7. Computerprogramm, **dadurch gekennzeichnet, dass** es Anweisungen enthält, um durch einen Prozessor (801) das Verfahren durchzuführen, das die Auswahl eines Gateways unter einer Vielzahl von Gateways zum Senden eines Frames ermöglicht und von einem den Prozessor enthaltenden Server ausgeführt wird, nach einem der Ansprüche 1 bis 4, wenn das Computerprogramm vom Prozessor ausgeführt wird.

8. Aufzeichnungsträger, auf dem das Programm nach dem vorhergehenden Anspruch gespeichert ist.

**Claims**

1. A method (200) for a communication system (100) comprising an electronic device (101) and a plurality of gateways (120, 12p, ..., 12N), the electronic device and each gateway being adapted for transmitting and receiving frames on a radio frequency band, each gateway being connected to a same central server (110), a first frame being sent by the electronic device to the central server, the frame comprising an identifier of the electronic device, each gateway receiving said frame and transmitting the received frame, in association with an identifier of the gateway, to the central server, a response delay being predefined for responding to the first frame, the method enabling selection by the central server of a gateway among the plurality of gateways for sending a second frame to the electronic device in response to the first frame, the method being executed by the central server and being **characterised in that** it comprises the steps of:

   - receiving the first frame from a first gateway.
   - determining a moment of sending and a duration of the second frame that is to be sent in response,
   - creating a list in association with the identifier of the electronic device, the list comprising the identifier of the first gateway,
   - triggering a waiting delay during which, if the central server receives from an other gateway another frame sent by the electronic device, then:

      - adding to the list the identifier of the other gateway that transmitted the frame,

   - at the expiry of the waiting delay, choosing at least one gateway the identifier of which is included in the list and, for this gateway:

      - finding planning data for frame sending by said gateway, and
      - checking whether selection criteria, dependent on the moment of sending and on the duration of the second frame, as well as on the planning data for frames sending of the gateway, are met,

   if the selection criteria are met, then selecting said gateway for sending the second frame in response to the first frame to the electronic device.

2. The method according to claim 1, each gateway transmitting a received frame in association with an identifier of the gateway and an indication about reception power of the frame, the method being **characterised in that**:

   - during the step of adding an identifier of a gateway to the list, the indication about the reception power is added in association with the identifier of the gateway and,
   - during the step of choosing a gateway in the list, the choice is dependent on the reception power associated with each identifier.

3. The method according to claim 2, the method being **characterised in that**, if, during the waiting delay, the central server receives a frame the reception power of which is lower than a predetermined value, then said frame is ignored for the remainder of the method.

4. The method according to claim 2 or 3, the planning data on the sending of a frame for each gateway comprising a parameter referred to as duty cycle, said parameter being a maximum ratio of the time spent by the said gateway in sending frames over a given period, each gateway in the list being successively chosen in order to check the selection criteria, the method being **characterised in that** selecting the gateway comprises a step of determining the value of the duty cycle at the moment of sending of the second frame for a gateway, and **in that** selection is dependent on the determined value of the duty cycle.

5. A central server (110) for a communication system (100) comprising an electronic device (101) and a plurality of gateways (120, 12p, ..., 12N), the electronic device and each gateway being adapted for sending and receiving frames on a radio frequency band, each gateway being connected to the central server, a first frame being sent by the electronic device to the central server, the frame comprising an identifier of the electronic device, each gateway receiving said frame and transmitting the received frame, in association with an identifier of the gateway, to the central server, a response delay being predefined for responding to the first frame, the central server being **characterised in that** it is adapted, in order to select a gateway among the plurality of gateways for sending a second frame to the electronic device in response to the first frame, for:

- receiving the first frame from a first gateway,
- determining a moment of sending and a duration of the second frame that is to be sent in response,
- creating a list in association with the identifier of the electronic device, the list comprising the identifier of the first gateway,
- triggering a waiting delay during which, if the central server receives from an other gateway another frame sent by the electronic device, then:

- adding to the list the identifier of the other gateway that transmitted the frame,

- at the expiry of the waiting delay, choosing at least one gateway the identifier of which is included in the list and, for this gateway:

- finding planning data for frame sending by said gateway, and
- checking whether selection criteria dependent on the moment of sending and on the duration of the second frame as well as on the planning data for frames sending of the gateway, are met,

if the selection criteria are met, then selecting said gateway for sending the second frame in response to the first frame to the electronic device.

6. A communication system (100) comprising an electronic device (100) and a plurality of gateways (120, 12p, ..., 12N), the electronic device and each gateway being adapted for sending and receiving frames on a radio-frequency band, each gateway being connected to the same central server (110), a first frame being sent by the electronic device to the central server, the frame comprising an identifier of the electronic device, each gateway receiving said frame and transmitting the frame received, in association with an identifier of the gateway, to the central server, a response delay being predefined in order to respond to the first frame, the central server being **characterised in that** it is adapted, in order to select a gateway among the plurality of gateways for sending a second frame to the electronic device in response to the first frame, for:

- receiving the first frame from a first gateway,
- determining a moment of sending and a duration of the second frame that is to be sent in response,
- creating a list in association with the identifier of the electronic device, the list comprising the identifier of the first gateway,
- triggering a waiting delay during which, if the central server receives from an other gateway another frame sent by the electronic device, then:

- adding the identifier of the other gateway that transmitted the frame to the list,

- at the expiry of the waiting delay, choosing at least one gateway the identifier of which is included in the list and, for this gateway:

- finding planning data for frame sending by said gateway, and
- checking whether selection criteria dependent on the moment of sending and on the duration of the second frame as well as on the planning data for frames sending of the gateway, are met,

if the selection criteria are met, then selecting said gateway for sending the second frame in response to the first frame to the electronic device.

7. A computer program, **characterised in that** it comprises instructions for implementing, by a processor (801), a method for selecting a gateway among a plurality of gateways for sending a frame and being executed by a server comprising the processor, according to any one of claims 1 to 4, when the computer program is executed by the processor.

8. A recording medium on which the program according to the preceding claim is stored.

100

12N

GTW(N)

110

LNS

130

NET1

TERMINAL

101

12p

GTW(p)

131

GTW(1)

120

NET2

**Fig. 1**
**(art antérieur)**

201 — INIT

200

202 — ATTENTE 1er TRAME

203 — EXTRACTION DONNEES : PRIO, d, Trx

204 — PRIO ?  oui / non

205 — RRSI ?  non / oui

206 — MAJ. LISTE GWT(i)

207 — TLNS ?  non / oui

208 — COPIE ?  non / oui

209 — PRIO ?  oui / non

A

B

**Fig. 2**

**Fig. 3**

Fig. 4

Fig. 5

600

601 → GWT(p)
SubBand(j)

k = 0

602 → k <
NbSubBands

608 → N = i - 1

615 → DISPO OK
GWT(p)

non

oui

603 → k = k + 1
I = 1

610 → i = i + 1

607 → k = j ?

non

oui

604 → i <= NB.
MESSAGE(k)

non

oui

605 → Trx <
ListTrx(i,k)

non

609 → Trx < ListTrx(i,k)
+ Listd(i,k)

non

oui

oui

606 → Trx + d <
ListTrx(i,k)

non

oui

620 → DISPO NON OK
GWT(p)

**Fig. 6**

701 GWT

704 Tref = ListTrx(1,j)

702 Tc(j) = 0 ?

703 N= 0 ?

non

oui

non

oui

705 Tref = Trx

706 Tref = Tc(j)

707 DETERMINE C(j,Trx)

708 C(j, Trx) >= D ?

oui

non

710 CREDIT OK GWT

720 CREDIT NON OK GWT

**Fig. 7**

700

**Fig. 8**

901 — DONNEES GWT(p)

900

i = 1

902 — i <= NB. MESSAGE

non

oui

903 — t > ListTrx(i,j,f)

non

oui

908 — i = i + 1

907 — Tref = t
N = i - 1

904 — ListTrx(i,j,f) + Listd(i,j,f) < t

oui

non

905 — N = i -1

906 — Tref = ListTrx(i,j,f)

912 — Tc(j,f) = ListTrx(1,j,f)

910 — Tc(j,f) = 0 ?

oui

911 — N= 0 ?

non

oui

913 — Tc(j,f) = Tref

non

920 — DETERMINE C(j,f,Tref)

921 — MAJ. DONNEES GWT(p) ; Tc(j,f) = Tref

**Fig. 9**

**Fig. 10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **NEUMANN PIERRE et al.** Indoor deployment of low-power wide area networks (LPWAN): A Lo-RaWAN case study'',2016 IEEE 12TH INTERNATIONAL CONFERENCE ON WIRELESS AND MOBILE COMPUTING, NETWORKING AND COMMUNICATIONS (WIMOB). IEEE, 17 Octobre 2016, 1-8